# FASCICULE DE BREVET EUROPEEN

(11) **EP 4 164 826 B1**
(45) Date de publication et mention de la délivrance du brevet: **16.10.2024**
(21) Numéro de dépôt: 21737713.4
(22) Date de dépôt: 07.06.2021
(51) Int. Cl.: B22F 10/31, B22F 10/36, B22F 12/30, B22F 10/28, B22F 12/90, G05B 19/401, B33Y 50/02, B23K 26/70, B29C 64/393, B23K 26/04, B23K 26/346, B33Y 40/00, B23K 26/03, B23K 26/342, B23K 31/12, B29C 64/245, B23K 26/042, B23K 26/046, B23K 26/082, B29C 64/30

(54) **APPAREIL DE CAPTURE D'IMAGE, KIT ET PROCEDE DE CALIBRATION D'APPAREIL DE FABRICATION ADDITIVE**
BILDAUFNAHMEVORRICHTUNG, KIT UND VERFAHREN ZUR KALIBRIERUNG EINER VORRICHTUNG ZUR GENERATIVEN FERTIGUNG
IMAGE-CAPTURING APPARATUS, KIT AND METHOD FOR CALIBRATING AN ADDITIVE MANUFACTURING APPARATUS

(30) Priorité: 11.06.2020 FR 2006111
(43) Date de publication de la demande: 19.04.2023
(73) Titulaire: AddUp, 63118 Cébazat (FR)
(72) Inventeur: ANNETON, Antoine, 63118 Cebazat (FR); VERNET, Raphaël, 63118 Cebazat (FR); LAUWERS, Olivier, 63118 Cebazat (FR); HOMMAN, Ahmed-Amine, 63118 Cebazat (FR)
(74) Mandataire: Barascou, Frédéric
(86) Numéro de dépôt international: PCT/FR2021/051019
(87) Numéro de publication internationale: WO 2021/250346

(56) Documents cités:
- EP-A1- 3 650 206
- WO-A1-2018/234312
- US-B1- 6 483 596
- RONI-JUSSI HALME ET AL: "Enhancing laser scanner accuracy by grid correction", PROCEEDINGS OF SPIE, vol. 7590, 10 February 2010 (2010-02-10), 1000 20th St. Bellingham WA 98225-6705 USA, pages 759007-1 - 759007-9, XP055762543, ISSN: 0277-786X, ISBN: 978-1-5106-3927-0, DOI: 10.1117/12.841741

## Description

L'invention concerne un appareil de capture d'au moins une image, un kit de calibration et un procédé de calibration pour système de tir d'un appareil de fabrication additive ou d'impression sélective.

Le document WO 2018/234312 décrit un plateau de calibration, qui porte des marquages de référence et qui est formé d'une plaque de verre, sur laquelle peut être positionnée un support formé par un feuillard en un matériau sensible au faisceau de rayonnement laser, ce support comportant des fenêtres centrées sur les marquages de référence. Un système de tir d'un faisceau laser d'un appareil de fabrication additive permet de tirer sur le support un motif de calibration formé de plusieurs points d'impact autour des marquages de référence. Un équipement de contrôle comportant une caméra, un système optique et un système d'éclairage à diodes est installé dans l'appareil de fabrication additive et est déplacé sur un support à rails selon deux directions horizontales au-dessus du plateau et du support pour acquérir une image du motif de calibration et du marquage de référence. Une commande du système de tir est corrigée en fonction de l'image obtenue.

Un inconvénient du dispositif décrit par ce document WO 2018/234312 est que l'acquisition d'image doit se faire dans l'appareil de fabrication additive. Ainsi, l'utilisateur est entièrement tributaire de l'appareil de fabrication additive pour acquérir l'image.

Le document RONI-JUSSI K+HALME ET AL. : « Enhancing laser scanner accuracy by grid correction », Proceedings of SPIE, 10 février 2010) prévoit en effet un procédé de calibration d'un scanner laser.

De plus, on cherche à améliorer l'éclairage des images acquises par le capteur de capture d'image.

On cherche également à pallier l'inconvénient de devoir utiliser uniquement le plateau prévu dans l'appareil de fabrication additive.

Un premier objectif de l'invention est d'obtenir un appareil de capture d'au moins une image, un kit de calibration et un procédé de calibration pour système de tir d'un appareil de fabrication additive ou d'impression sélective, qui pallient les inconvénients mentionnés ci-dessus.

Un deuxième objectif de l'invention est d'obtenir un appareil de capture d'au moins une image, un kit de calibration et un procédé de calibration pour système de tir d'un appareil de fabrication additive ou d'impression sélective, qui permettent d'améliorer l'éclairage des images réalisées par le capteur de capture d'image.

A cet effet, un premier objet de l'invention est un appareil amovible de capture d'au moins une image,
l'appareil de capture d'image comportant :
un boîtier comportant un cadre délimitant une ouverture destinée à recevoir un plateau de calibration portant au moins un marquage de référence et éventuellement au moins un marquage de test,
des organes de maintien du plateau de calibration dans l'ouverture,
caractérisé en ce que l'appareil de capture d'image comporte en outre :
   au moins une source de lumière visible de rétroéclairage située sous l'ouverture,
   un capteur pour acquérir au moins une image en lumière visible de rétroéclairage du plateau de calibration,
   un dispositif de guidage et de support pour positionner le capteur au-dessus de l'ouverture par rapport au cadre,
   un calculateur configuré pour analyser la au moins une image acquise par le capteur, reconnaître le au moins un marquage de référence et éventuellement le au moins un marquage de test dans la au moins une image acquise par le capteur, et calculer des corrections de commande de visée, destinées à un système de tir d'au moins un faisceau de rayonnement incident de puissance d'un appareil de fabrication additive, séparé et distinct de l'appareil de capture d'image,
   l'appareil de capture d'image et/ou le calculateur comportant une première mémoire dans laquelle sont préenregistrées, en association avec un identifiant unique déterminé du plateau de calibration, des coordonnées absolues du au moins un marquage de référence, ayant été déterminées au préalable,
   le calculateur étant configuré pour calculer les corrections de commande de visée du système de tir du au moins un faisceau de rayonnement incident de puissance de l'appareil de fabrication additive, en fonction de coordonnées du au moins un marquage de test calculées pour le au moins un marquage de référence et en fonction des coordonnées absolues du au moins un marquage de référence.

Grâce à l'invention, on peut utiliser un plateau de calibration situé en dehors de l'appareil de fabrication additive, les marquages de référence associés à ce plateau étant reconnus avec l'identifiant du plateau dans l'appareil de capture d'image.

Grâce à l'invention, l'appareil de capture d'au moins une image est séparé de l'appareil de capture d'au moins une image, pour pouvoir effectuer un rétroéclairage du plateau de calibration, ce qui permet d'obtenir une meilleure image des marquages de test réalisés par le tir du faisceau de rayonnement incident de puissance que par l'équipement de contrôle selon le document WO 2018/234312, ayant un éclairage par le dessus. L'appareil de capture d'au moins une image fournit directement les corrections de commande de visée à effectuer sur le système de tir du au moins un faisceau F de rayonnement incident de puissance de l'appareil de fabrication additive. L'appareil de capture d'au moins une image peut ainsi être transporté pour imager et analyser dans un local de travail les marquages d'un ou de plusieurs plateaux de calibration et fournir les corrections de commande de visée correspondant à ces marquages.

Un deuxième objet de l'invention est un kit transportable de calibration, comportant l'appareil de capture d'au moins une image tel que décrit ci-dessus et au moins un plateau de calibration amovible,
le plateau de calibration amovible étant apte à être positionné dans le champ d'un système de tir d'au moins un faisceau de rayonnement incident de puissance d'un appareil de fabrication additive,
le plateau de calibration amovible comportant une plaque,
la plaque comportant une face supérieure destinée à être tournée vers le faisceau de rayonnement incident de puissance, la plaque portant le au moins un marquage de référence et étant destinée à recevoir au moins un marquage de test, et une face inférieure, qui est éloignée par rapport à la face supérieure suivant le sens de l'épaisseur de la plaque,
le plateau de calibration amovible comporte au moins une couche de gravage par faisceau de rayonnement incident de puissance,
la au moins une couche de gravage par faisceau de rayonnement incident de puissance étant solidaire de la face supérieure de la plaque et étant opaque à de la lumière visible,
la au moins une couche de gravage par faisceau de rayonnement incident de puissance étant apte à être détruite localement par le faisceau de rayonnement incident de puissance pour former éventuellement le au moins un marquage de test,
la plaque étant transparente à la lumière visible,
la face inférieure de la plaque étant dépolie.

Suivant un mode de réalisation de l'invention, la face inférieure de la plaque permet à de la lumière visible de rétroéclairage de traverser depuis la face inférieure la plaque, le au moins un marquage de référence et éventuellement le au moins un marquage de test.

Suivant un mode de réalisation de l'invention, le au moins un marquage de référence est réalisé par destruction locale de la au moins une couche de gravage par le faisceau de rayonnement incident de puissance.

Suivant un mode de réalisation de l'invention, dans la au moins une couche de gravage par faisceau de rayonnement incident de puissance se trouve au moins une mire de positionnement de dimensions supérieures aux dimensions du au moins un marquage de référence et/ou aux dimensions du au moins un marquage de test.

Suivant un mode de réalisation de l'invention, des coordonnées absolues du au moins un marquage de référence, ayant été déterminées au préalable, sont associées au plateau de calibration.

Suivant un mode de réalisation de l'invention, la au moins une couche de gravage par faisceau de rayonnement incident de puissance est au moins une couche de gravage par faisceau de rayonnement laser incident de puissance.

Suivant un mode de réalisation de l'invention, la plaque comprend du verre ou est en verre.

Suivant un mode de réalisation de l'invention, le plateau de calibration comporte le au moins un marquage de test réalisé par destruction locale de la au moins une couche de gravage par le faisceau de rayonnement incident de puissance.

Suivant un mode de réalisation de l'invention, dans la au moins une couche de gravage par faisceau de rayonnement incident de puissance se trouvent le au moins un marquage de référence réalisé par destruction locale de la au moins une couche de gravage par le faisceau de rayonnement incident de puissance et le au moins un marquage de test réalisé par destruction locale de la au moins une couche de gravage par le faisceau de rayonnement incident de puissance.

Suivant un mode de réalisation de l'invention, le au moins un marquage de test présent dans la couche de gravage par faisceau de rayonnement incident de puissance comporte un identifiant du marquage de test.

Suivant un mode de réalisation de l'invention, le kit comporte en outre un support de stockage amovible, qui est distinct de la première mémoire et dans lequel sont enregistrés l'identifiant unique déterminé du plateau (10) de calibration et les coordonnées absolues du au moins un marquage de référence, associées à l'identifiant unique déterminé du plateau de calibration, l'appareil de capture d'image et/ou le calculateur comportant une interface permettant de récupérer dans le support de stockage amovible l'identifiant unique déterminé du plateau de calibration et/ou les coordonnées absolues du au moins un marquage de référence, associées à l'identifiant unique déterminé du plateau de calibration, pour les enregistrer dans la première mémoire.

Suivant un mode de réalisation de l'invention, le plateau de calibration amovible comporte au moins une deuxième mémoire permanente, dans laquelle sont enregistrées l'identifiant unique du plateau de calibration et les coordonnées absolues du au moins un marquage de référence, qui sont associées à l'identifiant unique du plateau de calibration,
la au moins une deuxième mémoire permanente du plateau de calibration amovible est sous la forme d'une puce NFC et/ou RFID, fixée au plateau de calibration amovible,
l'appareil de capture d'image et/ou le calculateur et/ou le capteur comporte un lecteur NFC et/ou RFID, apte à lire dans la puce NFC et/ou RFID l'identifiant unique du plateau de calibration et/ou les coordonnées absolues du au moins un marquage de référence, pour les enregistrer dans la première mémoire.

Un troisième objet de l'invention est un procédé de calibration d'un système de tir d'au moins un faisceau de rayonnement incident de puissance d'un appareil de fabrication additive à l'aide du kit amovible de calibration tel que décrit ci-dessus,
caractérisé en ce que le procédé de calibration comporte les étapes suivantes :
positionnement du plateau de calibration amovible dans l'appareil de fabrication additive, la au moins une couche de gravage par faisceau de rayonnement incident de puissance du plateau de calibration amovible étant orientée vers un côté d'émission du au moins un faisceau de rayonnement incident de puissance du système de tir de l'appareil de fabrication additive,
commande du système de tir du au moins un faisceau de rayonnement incident de puissance de l'appareil de fabrication additive, selon une commande de visée du système de tir, déterminée par rapport au au moins un marquage de référence, pour émettre le au moins un faisceau de rayonnement incident de puissance depuis le côté d'émission sur la au moins une couche de gravage du plateau de calibration amovible, pour y former le au moins un marquage de test par destruction locale de la couche de gravage,
extraction du plateau de calibration amovible hors de l'appareil de fabrication additive,
déplacement du plateau de calibration amovible jusqu'à l'appareil de capture d'au moins une image, transportable et séparé du système de tir du au moins un faisceau de rayonnement incident de puissance de l'appareil de fabrication additive,
positionnement du plateau de calibration amovible dans l'ouverture de l'appareil de capture d'image,
commande de la au moins une source de lumière visible de rétroéclairage de l'appareil de capture d'image pour que la lumière visible de rétroéclairage traverse dans l'ouverture, depuis la face inférieure, la plaque, le au moins un marquage de référence et le au moins un marquage de test,
acquisition, par le capteur, d'au moins une image d'une zone dans laquelle se trouve le au moins un marquage de référence et le au moins un marquage de test en lumière visible de rétroéclairage,
analyse, par un calculateur de l'appareil de capture d'image, de la au moins une image acquise par le capteur, et reconnaissance du au moins un marquage de référence et du au moins un marquage de test dans la au moins une image acquise, pour calculer des coordonnées du au moins un marquage de test par rapport au au moins un marquage de référence,
calcul et enregistrement dans la première mémoire de l'appareil de capture d'image, par le calculateur de l'appareil de capture d'image, de corrections de commande de visée du système de tir du au moins un faisceau de rayonnement incident de puissance de l'appareil de fabrication additive en fonction au moins des coordonnées du au moins un marquage de test calculées pour le au moins un marquage de référence.

Suivant un mode de réalisation de l'invention, dans la première mémoire sont préenregistrées des coordonnées absolues du au moins un marquage de référence, ayant été déterminées au préalable,
le calculateur étant configuré pour calculer les corrections de commande de visée du système de tir du au moins un faisceau de rayonnement incident de puissance de l'appareil de fabrication additive en fonction des coordonnées du au moins un marquage de test calculées pour le au moins un marquage de référence et en fonction des coordonnées absolues du au moins un marquage de référence.

Suivant un mode de réalisation de l'invention, dans la première mémoire sont préenregistrées des coordonnées absolues du au moins un marquage de référence, ayant été déterminées au préalable,
le calculateur étant configuré pour calculer les corrections de commande de visée du système de tir du au moins un faisceau de rayonnement incident de puissance de l'appareil de fabrication additive en fonction des coordonnées du au moins un marquage de test calculées pour le au moins un marquage de référence et en fonction des coordonnées absolues du au moins un marquage de référence.

Suivant un mode de réalisation de l'invention, les corrections de commande de visée sont enregistrées dans la première mémoire en association avec l'identifiant du plateau de calibration amovible et avec les coordonnées absolues du au moins un marquage de référence.

Suivant un mode de réalisation de l'invention, les corrections de commande de visée sont enregistrées dans le système de tir du au moins un faisceau de rayonnement incident de puissance de l'appareil de fabrication additive.

Suivant un mode de réalisation de l'invention, dans la au moins une couche de gravage par faisceau de rayonnement incident de puissance se trouve au moins une mire de positionnement, ayant des dimensions supérieures aux dimensions du au moins un marquage de référence et/ou aux dimensions du au moins un marquage de test,
les étapes suivantes sont effectuées entre le positionnement du plateau de calibration amovible dans l'appareil de fabrication additive et la commande du système de tir du au moins un faisceau de rayonnement incident de puissance de l'appareil de fabrication additive :
commande du au moins un système de tir de l'appareil de fabrication additive pour émettre au moins un autre faisceau de rayonnement en lumière visible, sans émettre de faisceau de rayonnement incident de puissance depuis le côté d'émission sur la au moins une couche de gravage du plateau de calibration amovible, pour projeter un premier impact du au moins un autre faisceau de rayonnement en lumière visible sur la au moins une mire de positionnement,
mesure, à l'oeil nu sur la au moins une mire de positionnement, de l'écart de centrage du premier impact de l'autre faisceau de rayonnement en lumière visible par rapport à une position théorique prévue en un centre de la au moins une mire de positionnement,
modification de la commande du au moins un système de tir de l'appareil de fabrication additive selon une correction de décalage de commande pour émettre le au moins un autre faisceau de rayonnement en lumière visible, sans émettre de faisceau de rayonnement incident de puissance depuis le côté d'émission sur la au moins une couche de gravage du plateau de calibration amovible, pour projeter un deuxième impact du au moins un autre faisceau de rayonnement en lumière visible sur le centre de la au moins une mire de positionnement,
enregistrement de la correction de décalage de commande dans une mémoire du système de tir ou de l'appareil de fabrication additive et/ou dans une mémoire de l'appareil de capture d'image et/ou dans une mémoire du calculateur,
ladite commande du au moins un système de tir du au moins un faisceau de rayonnement incident de puissance de l'appareil de fabrication additive, selon la commande de visée du système de tir, déterminée par rapport au au moins un marquage de référence, pour émettre le au moins un faisceau de rayonnement incident de puissance depuis le côté d'émission sur la au moins une couche de gravage du plateau de calibration amovible, pour y former le au moins un marquage de test par destruction locale de la couche de gravage, étant effectuée en étant corrigée par la correction de décalage de commande, ayant été enregistrée,
le au moins un faisceau de rayonnement incident de puissance et le au moins un autre faisceau laser en lumière visible étant coaxiaux.

Suivant un mode de réalisation de l'invention, le kit comporte en outre un support de stockage amovible, qui est distinct de la première mémoire et dans lequel sont enregistrés l'identifiant unique déterminé du plateau de calibration et les coordonnées absolues du au moins un marquage de référence, associées à l'identifiant unique déterminé du plateau de calibration, l'appareil de capture d'image et/ou le calculateur comportant une interface permettant de récupérer dans le support de stockage amovible l'identifiant unique déterminé du plateau de calibration et/ou les coordonnées absolues du au moins un marquage de référence, associées à l'identifiant unique déterminé du plateau de calibration, pour les enregistrer dans la première mémoire,
le procédé comporte en outre, entre le positionnement du plateau de calibration amovible dans l'appareil de fabrication additive et la commande du système de tir du au moins un faisceau de rayonnement incident de puissance de l'appareil de fabrication additive selon la commande de visée du système de tir, l'étape intermédiaire de lecture de l'identifiant unique du plateau de calibration et/ou des coordonnées absolues du au moins un marquage de référence dans le support de stockage amovible.

Suivant un mode de réalisation de l'invention, le plateau de calibration amovible comporte au moins une deuxième mémoire permanente, dans laquelle sont enregistrées un identifiant unique du plateau de calibration et des coordonnées absolues du au moins un marquage de référence, qui ont été déterminées au préalable et qui sont associées à l'identifiant unique du plateau de calibration,
la au moins une deuxième mémoire permanente est sous la forme d'une puce NFC et/ou RFID, fixée au plateau de calibration amovible,
l'appareil de capture d'image et/ou le calculateur et/ou le capteur comporte un lecteur NFC et/ou RFID, apte à lire dans la puce NFC et/ou RFID l'identifiant unique du plateau de calibration et/ou les coordonnées absolues du au moins un marquage de référence,
le procédé comporte en outre, entre le positionnement du plateau de calibration amovible dans l'appareil de fabrication additive et la commande du système de tir du au moins un faisceau de rayonnement incident de puissance de l'appareil de fabrication additive selon la commande de visée du système de tir, l'étape intermédiaire de lecture de l'identifiant unique du plateau de calibration et/ou des coordonnées absolues du au moins un marquage de référence dans la puce NFC et/ou RFID par le lecteur NFC et/ou RFID.

Suivant un mode de réalisation de l'invention, le procédé comporte en outre, entre le positionnement du plateau de calibration amovible dans l'appareil de fabrication additive et la commande du système de tir du au moins un faisceau de rayonnement incident de puissance de l'appareil de fabrication additive selon la commande de visée du système de tir, l'étape intermédiaire de lecture de l'identifiant unique du plateau de calibration et/ou des coordonnées absolues du au moins un marquage de référence dans un fichier stocké dans une base de données hébergée sur un serveur distant, auquel le calculateur a accès.

L'invention sera mieux comprise à la lecture de la description qui va suivre, donnée uniquement à titre d'exemple non limitatif en référence aux figures ci-dessous des dessins annexés.
[Fig. 1] représente une vue schématique en perspective de la chaîne optique d'une tête trois axes d'un système de tir d'un faisceau laser d'un appareil de fabrication additive, pouvant utiliser le plateau de calibration, le kit de calibration et le procédé de calibration suivant un mode de réalisation de l'invention.
[Fig. 2] représente une vue schématique de face du balayage pouvant être effectué par le faisceau laser du système de tir d'un appareil de fabrication additive, pouvant utiliser le plateau de calibration, le kit de calibration et le procédé de calibration suivant un mode de réalisation de l'invention, pour illustrer une déformation en l'absence de correction.
[Fig. 3] représente une vue schématique de dessus du balayage pouvant être effectué par le faisceau laser du système de tir d'un appareil de fabrication additive, pouvant utiliser le plateau de calibration, le kit de calibration et le procédé de calibration suivant un mode de réalisation de l'invention, pour illustrer une déformation en l'absence de correction.
[Fig. 4] représente une vue schématique en coupe transversale d'un plateau de calibration suivant un mode de réalisation de l'invention.
[Fig. 5] représente une vue schématique en perspective d'un plateau de calibration suivant un mode de réalisation de l'invention, positionné dans un appareil de capture d'image suivant un mode de réalisation de l'invention.
[Fig. 6] représente une vue schématique de dessus de marquages de référence et de marquages de test pouvant être présents sur un plateau de calibration suivant un mode de réalisation de l'invention.
[Fig. 7] représente une vue schématique de dessus d'une mire de positionnement pouvant être présente sur un plateau de calibration suivant un mode de réalisation de l'invention.
[Fig. 8] représente une vue schématique en perspective d'un appareil de capture d'image suivant un mode de réalisation de l'invention.
[Fig. 9] représente un organigramme d'un procédé de calibration suivant un mode de réalisation de l'invention.
[Fig. 10] représente une vue schématique de dessus d'une image obtenue par un appareil de capture d'image suivant un mode de réalisation de l'invention.

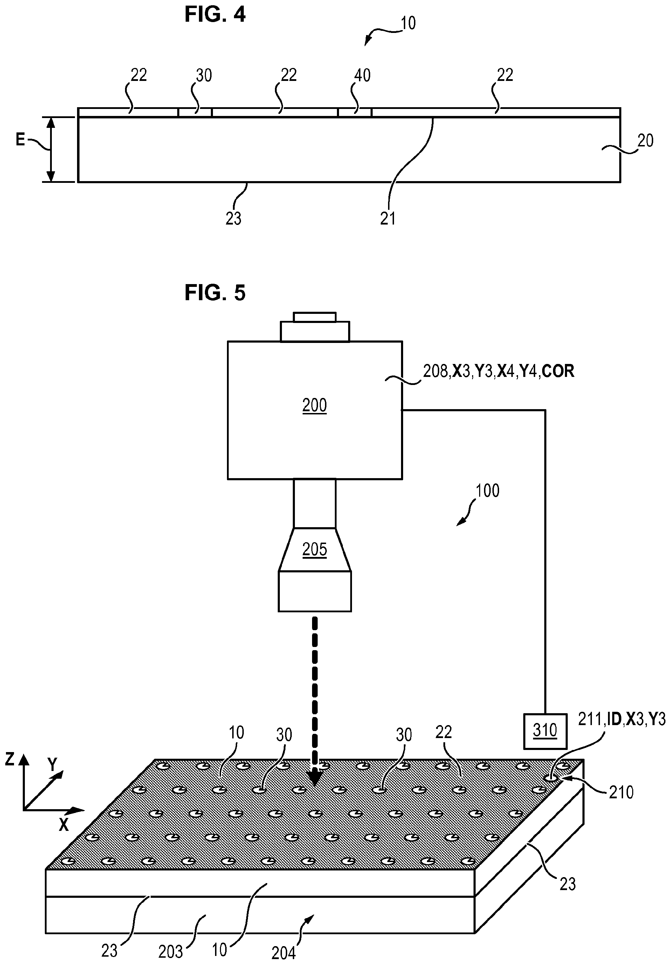

On décrit ci-dessous plus en détail en référence aux figures 4 à 7 un exemple de réalisation d'un plateau 10 de calibration amovible pouvant être utilisé suivant l'invention.

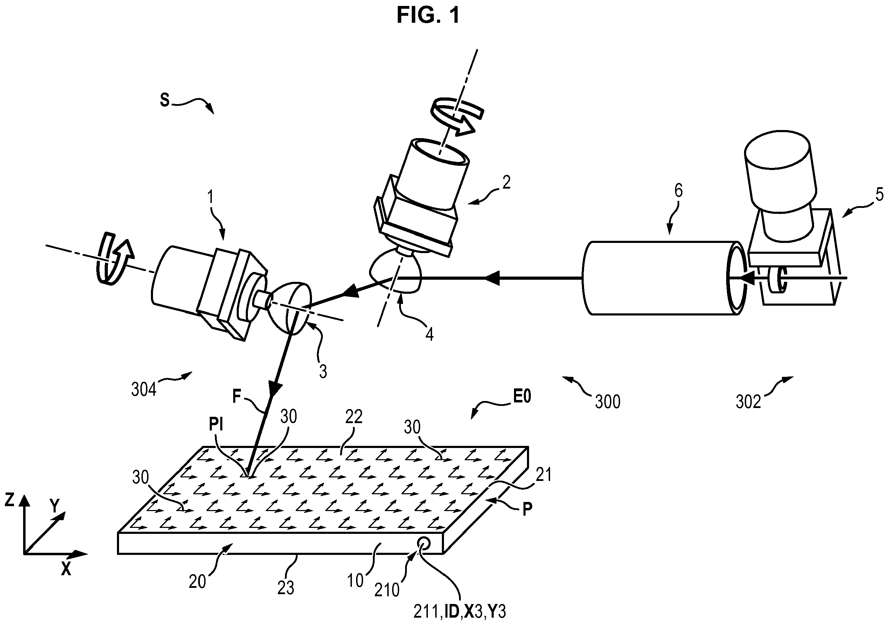

Le plateau 10 de calibration amovible est apte à être positionné dans un système 300 de tir du au moins un faisceau F de rayonnement incident de puissance d'un appareil 302 de fabrication additive ou d'impression sélective, illustré aux figures 1 à 3. Le faisceau F de rayonnement incident de puissance peut être un faisceau F de rayonnement incident de puissance optique ou un faisceau F de rayonnement incident de puissance laser. Bien entendu, ce qui est décrit ci-dessous pour le faisceau laser F est également valable pour un faisceau F de rayonnement incident de puissance optique ou pour un faisceau F de rayonnement incident de puissance laser. Le faisceau F de rayonnement incident de puissance est focalisé.

La fabrication additive sélective consiste à réaliser des objets tridimensionnels par consolidation de zones sélectionnées sur des strates successives de matériau pulvérulent (poudre métallique, poudre de céramique). Les zones consolidées correspondent à des sections successives de l'objet tridimensionnel. La consolidation se fait, couche par couche, par une fusion sélective totale ou partielle réalisée avec une source de rayonnement focalisé, telle qu'une source optique (laser de forte puissance par exemple) ou encore une source de faisceau de particules (par exemple un faisceau d'électrons - technologie dite EBM ou « Electron Beam Melting » selon la terminologie anglo-saxonne généralement utilisée dans le domaine).

On se réfère dans la suite principalement aux sources optiques (telles qu'utilisées dans les technologies SLM ou « Sélective Laser Melting » selon la terminologie anglo-saxonne), telles que par exemple les sources de faisceau laser de puissance. Elle trouve toutefois application avec tout autre type de rayonnement.

Ainsi qu'illustré sur les figures 1 à 3, les appareils 302 de fabrication additive de type à source optique utilisent un système 300 de tir d'un ou plusieurs faisceaux incidents laser F de puissance qui utilisent des systèmes S de tête trois axes à trois galvanomètres pour permettre une précision accrue d'une part de la position du point d'impact sur la couche de matériau pulvérulent et d'autre part de la focalisation du faisceau F au niveau de ladite couche.

Deux galvanomètres 1, 2 sont utilisés pour guider en rotation deux miroirs 3, 4 et permettre de contrôler la trajectoire du faisceau F en sortie de la tête S, afin de contrôler le positionnement du point d'impact du faisceau sur le lit de poudre (plan de travail P) (commande en X et en Y). Par ailleurs, un module DFM (« Dynamic Focusing Module » selon la terminologie anglo-saxonne) - comportant un galvanomètre, un module de translation et une lentille - permet, en jouant sur la translation de ladite lentille, de parfaitement ajuster la distance de focalisation du faisceau F au niveau du lit de poudre (commande en Z). Sur la figure 1, on a également représenté un module objectif 6 qui introduit une focalisation fixe, le module DFM 5 permettant la modification de la focalisation se trouvant en amont.

On comprend en effet que plus le faisceau laser F est correctement focalisé au niveau du lit de poudre, plus l'énergie transmise au point de fusion est importante et maîtrisée.

On notera néanmoins qu'un tel système S de tête trois axes implique deux principaux types de déformation au niveau du lit de poudre (plan P).

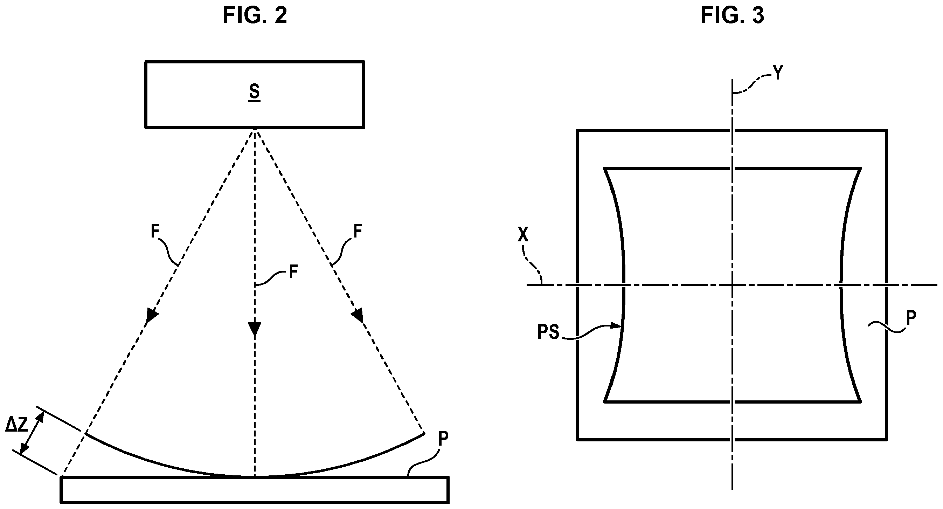

Tout d'abord, la focalisation au niveau du plan de travail P où se situe le lit de poudre varie selon l'inclinaison du faisceau optique F. Comme l'illustre en effet la figure 2, l'inclinaison du faisceau F résulte des variations de longueur de chemin optique (schématisées par ΔZ sur la figure 2), ces variations étant elles-mêmes à ajouter aux phénomènes dus aux jeux induits par les miroirs ou encore par la traversée des différentes vitres qui peuvent être prévues dans l'appareil 302 de fabrication additive.

En l'absence de traitement de ce décalage géométrique, la focalisation sur l'ensemble du plan de travail P n'est donc pas constante.

Par ailleurs, on observe classiquement sur le plan de travail P une déformation non linéaire en X et en Y des motifs des points d'impact (déformation dite « pillow-shaped » selon la terminologie anglo-saxonne généralement utilisée - forme PS de la figure 3). Cette déformation est due à la géométrie du chemin optique, notamment à la position des miroirs et optiques et à leur distance par rapport au plateau P.

Il est classiquement connu de corriger les commandes des têtes pour tenir compte des distorsions en X et en Y.

On utilise à cet effet des tables de corrections dédiées préalablement déterminées.

Ces tables fournissent des différentiels de commande dont on corrige les entrées de commande de la tête S à trois axes. Les tirs et balayages du plan de travail P par le faisceau optique F se font ainsi avec des positions en X et Y corrigées par rapport au lit de poudre.

Pour déterminer ces tables de correction, on utilise des plateaux 10 de calibration qui portent des marquages 30 de référence. On met en oeuvre sur des positions cibles prédéterminées du plateau 10 des séquences de tirs optiques F pour réaliser des marquages 40 de test. L'appareil 200 de capture d'image relève la position de ces marquages 40 de test par rapport aux marquages 30 de référence.

Les différentiels entre les positions des marquages 40 de test ainsi réalisés sur le plateau 10 de calibration et les positions de tirs qui étaient théoriquement ciblées sont utilisés pour calculer les corrections COR à appliquer aux commandes en X et en Y du système S de tête de faisceau optique.

Le plateau 10 de calibration amovible comporte une plaque 20 transparente, comportant une face supérieure 21 destinée à être tournée vers le faisceau incident F. La plaque 20 peut comprendre du verre ou être en verre. Ce qui est décrit ci-dessous pour la plaque 20 de verre est valable pour toute plaque 20 transparente à la lumière visible. La face supérieure 21 de la plaque 20 de verre est solidaire d'au moins une couche 22 de gravage par le faisceau incident F. La couche 22 de gravage est destinée à être tournée vers le faisceau incident F, lorsque le plateau 10 de calibration est disposé dans l'appareil 302 de fabrication additive. La couche 22 de gravage est opaque à la lumière visible. Sous la couche 22 de gravage, la plaque 20 de verre est transparente à la lumière visible.

La couche 22 de gravage est apte à être détruite localement par le faisceau F de rayonnement incident de puissance du système 300 de tir de l'appareil 302 de fabrication additive, auquel cas la couche 22 de gravage est appelée couche 22 de gravage par faisceau F de rayonnement incident de puissance, ou par le faisceau F de rayonnement incident de puissance laser du système 300 de tir de l'appareil 302 de fabrication additive, auquel cas la couche 22 de gravage est appelée couche 22 de gravage laser, ou par le faisceau F de rayonnement incident de puissance optique du système 300 de tir de l'appareil 302 de fabrication additive, auquel cas la couche 22 de gravage est appelée couche 22 de gravage optique, pour former un ou plusieurs marquage 30 de référence et/ou un ou plusieurs marquages 40 de test dans cette couche 22 de gravage. Le ou les marquages 30 et/ou 40 sont donc visibles par transparence dans la couche 22 de gravage laser et sont entourés par des parties restées opaques (non détruites) de la couche 22. Ce qui est décrit ci-dessous pour la couche 22 de gravage laser est également valable pour la couche 22 de gravage par faisceau F de rayonnement incident de puissance et pour la couche 22 de gravage optique.

La face inférieure 23 de la plaque 20 de verre est éloignée de la face supérieure 21 par une épaisseur non nulle E de la plaque 20 de verre. La face inférieure 23 de la plaque 20 de verre est dépolie. Ainsi, le plateau 10 de calibration peut être éclairé par la face inférieure 23, pour pouvoir capturer une image de la couche 22 supérieure ayant le ou les marquages 30 et/ou 40, qui apparaissent alors par transparence dans cette couche 22 supérieure, ainsi que représenté par exemple à la figure 5. La figure 5 montre une source 204 de lumière visible de rétroéclairage sur laquelle peut être disposée la face inférieure 23 du plateau 10 de calibration, pour pouvoir capturer par rétroéclairage une image de la couche 22 supérieure de gravage laser et du ou des marquages 30 et/ou 40 par l'appareil 200 de capture d'image, qui comporte cette source 204 de lumière visible de rétroéclairage et qui est distinct et à distance de l'appareil 302 de fabrication additive. Cet appareil 200 de capture d'image sera décrit plus en détail ci-dessous. Ainsi, le plateau 10 de calibration suivant l'invention permet d'obtenir une image rétroéclairée des marquages 30 et/ou 40, qui est d'une meilleure qualité et plus précise pour pouvoir les détecter par traitement automatisé d'image par l'appareil 200 de capture d'image.

Suivant un mode de réalisation de l'invention, la face inférieure 23 dépolie de la plaque 20 de verre permet à la lumière visible de rétroéclairage de traverser depuis la face inférieure 23 la plaque 20 de verre, puis le ou les marquages 30 de référence et/ou le ou les marquages 40 de test. Suivant un mode de réalisation de l'invention, la face inférieure 23 dépolie de la plaque 20 de verre permet de multiplier les directions de réflexions du faisceau laser incident F rencontrant par le dessus la face inférieure 23, après que ce faisceau laser incident Fa traversé la couche 22 de gravage laser puis la plaque 20 de verre. Sachant que la puissance du faisceau laser incident F est fixe, ceci permet de répartir l'énergie réfléchie sur un maximum de faisceaux réfléchis sortants, caractérisés par des directions de réflexion différentes et de pallier l'inconvénient des réflexions du faisceau. Plus ces directions de réflexion différentes sont nombreuses, plus leur quantité d'énergie individuelle est faible car il s'agit simplement d'une répartition de la puissance incidente. Ainsi, au contact de la couche 22 de gravage laser, la quantité d'énergie de chaque faisceau réfléchi individuel est suffisamment faible pour ne pas marquer cette couche 22 de gravage laser.

Suivant un mode de réalisation de l'invention, la couche 22 de gravage laser est configurée pour pouvoir être brûlée localement par le faisceau laser incident F pour y former le ou les marquages 30 et/ou 40. Suivant un mode de réalisation de l'invention, la couche 22 de gravage laser est constituée ou comprend une couche de laquage opaque, par exemple noire ou d'une couleur sombre, apte à être détruite localement par le faisceau laser incident F pour y former le ou les marquages 30 et/ou 40.

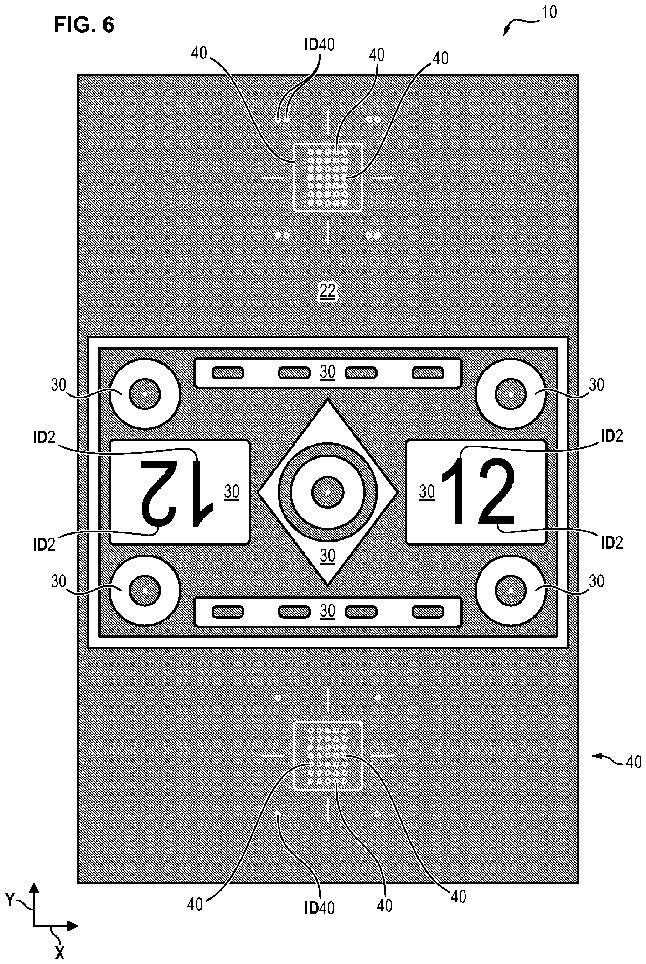

Suivant un mode de réalisation de l'invention, lors d'une étape préalable E0, on positionne le plateau 10 de calibration sur l'appareil 302 de fabrication additive et on effectue par le système 300 de tir de cet appareil 302 de fabrication additive un ou plusieurs tirs d'un ou plusieurs faisceaux laser incidents F de puissance sur le dessus de la couche 22 de gravage laser pour y réaliser le ou les marquages 30 de référence, et ce par destruction de cette couche 22 au niveau du ou des points PI d'impact du ou des faisceaux laser incidents F de puissance sur cette couche 22 de gravage laser. Ainsi, le plateau 10 de calibration peut ne comporter que le ou les marquages 30 de référence sans marquages 40 de test dans la couche 22 de gravage laser, ainsi que représenté par exemple à la figure 5. Cette étape préalable E0 de réalisation du ou des marquages 30 de référence peut être effectuée par le fournisseur du ou des plateaux 10 de calibration. On peut ainsi fournir à l'utilisateur final d'un appareil 302 de fabrication additive un ou plusieurs plateaux de référence comportant le ou les marquages 30 de référence présents dessus. Ainsi, le ou les marquages 30 de référence peuvent être intégrés au plateau 10 de calibration avec un positionnement plus précis que dans l'état de la technique, où les marquages de références pouvaient être formés par des plaquettes de référence rapportées et fixées sur le plateau de calibration. Suivant un mode de rélaisation, on crée (on tire à nouveau) des nouveaux marquages 30 de référence avec chaque nouveau plateau de calibration, et on ne conserve pas ces marquages 30 de référence d'une calibration à une autre. Le ou les marquages 30 de référence peuvent comporter un ou plusieurs motifs spécifiques, comme par exemple ceux illustrés à la figure 6. Ces motifs spécifiques du ou des marquages 30 de référence permettent de contrôler l'aspect dimensionnel des marquages 30 de référence et de s'assurer que les marquages 30 de référence soient bien identifiés par l'appareil 200 de capture d'image. Le travail avec le ou les marquages 30 de référence crée un lien de transitivité entre les calibrations de tous les systèmes optiques S d'un même appareil 302 de fabrication additive. L'invention permet de calibrer en position simultanément un ou plusieurs systèmes optiques S de déviation d'un faisceau F d'un même appareil 302 de fabrication additive par rapport à une référence commune.

Suivant un mode de réalisation de l'invention, des coordonnées absolues X3, Y3 du ou des marquages 30 de référence, ayant été déterminées au préalable lors de l'étape préalable E0, sont associées à chaque plateau 10 de calibration. Ces coordonnées absolues X3, Y3 du ou des marquages 30 de référence sont donc spécifiques à chaque plateau 10 de calibration et à chaque marquage 30 de référence. Cela permet de fournir à l'utilisateur final de l'appareil 302 de fabrication additive un ou plusieurs plateaux de référence comportant le ou les marquages 30 de référence présents dessus, ainsi que les coordonnées absolues X3, Y3 du ou des marquages 30 de référence spécifiques à chaque plateau 10 de calibration.

L'appareil 200 de capture d'image et/ou un kit transportable 100 de calibration comporte une (ou plusieurs) mémoire permanente 208 dans laquelle sont enregistrées un identifiant ID unique du plateau 10 de calibration et les coordonnées absolues X3, Y3 du au moins un marquage 30 de référence, qui ont été déterminées au préalable et qui sont associées à l'identifiant ID unique du plateau 10 de calibration. Cela permet de pallier l'inconvénient de l'état de la technique, où l'on doit utiliser uniquement un plateau prévu dans l'appareil de fabrication additive. Les coordonnées absolues X3, Y3 peuvent être préenregistrées dans une mémoire informatique permanente 208 d'un ordinateur ou dans un support de mémoire permanent lisible par un ordinateur ou dans tout dispositif de codage, et ce par exemple en association avec l'identifiant ID unique déterminé du plateau 10 de calibration. Dans le cas où plusieurs plateaux 10 de calibration sont prévus, les identifiants ID des plateaux 10 de calibration sont différents l'un de l'autre.

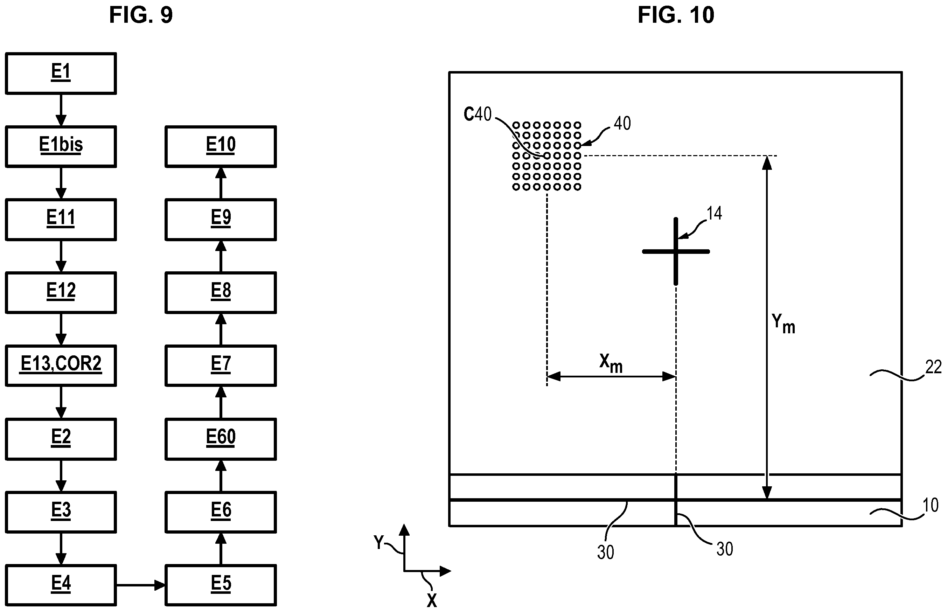

Il peut être prévu entre les étapes E1 et E2 décrites en référence à la figure 9, notamment entre l'étape E1 et l'étape E11, une tépe E1 bis dans laquelle on enregistre dans la mémoire 208 de l'identifiant ID unique du plateau 10 de calibration et/ou des coordonnées absolues X3, Y3 du au moins un marquage 30 de référence.

Suivant un mode de réalisation de l'invention, illustré aux figures 1 et 5, le plateau 10 de calibration peut comporter au moins une mémoire permanente 210 dans laquelle sont enregistrées un identifiant ID unique du plateau 10 de calibration et les coordonnées absolues X3, Y3 du au moins un marquage 30 de référence, qui ont été déterminées au préalable et qui sont associées à l'identifiant ID unique du plateau 10 de calibration. Cette mémoire 210 peut être sous la forme d'une puce 211 fixée sur le plateau 10. Cette puce 211 peut être du type NFC et/ou RFID, ou autres. RFID est l'abréviation d'identification par radiofréquence (en anglais : « radio frequency identification »). NFC est l'abréviation de communication en champ proche (en anglais : « near field communication »). Cela permet de gérer l'association entre le plateau 10 de calibration et son fichier de mesures (X3, Y3), et d'éviter une infrastructure de réseau complexe engendrant des problématiques d'accès extérieurs. La puce 211 peut être collée sur le plateau 10 de calibration, par exemple sur sa face inférieure 23 ou ses faces latérales reliant la face supérieure 21 à la face inférieure 23 ou sur sa face supérieure 21, et ce à distance des marquages 30 et 40. La puce 211 peut être autocollante. La puce 211 peut autoriser des capacités de stockage jusqu'à 8 kilo-octets. Dans ce cas, le kit de calibration peut comporter un lecteur 310, pouvant être du type RFID et/ou NFC, capable de lire la puce 211 de la mémoire 210 lorsque le lecteur 310 et la puce 211 sont approchés l'un de l'autre, pour lire l'identifiant ID unique du plateau 10 de calibration et/ou les coordonnées absolues X3, Y3 du au moins un marquage 30 de référence, qui sont présentes dans la puce 211. Au démarrage de la procédure de calibration, la puce 211 du plateau 10 sera scannée par le lecteur 310 et le fichier présent dans la puce 211 sera automatiquement lu, dézippé et reformaté, permettant ainsi de connaître par le lecteur 310 les positions X3, Y3 des marquages 30 de référence du plateau 10. Le lecteur 310 peut faire partie de l'appareil 200 de capture d'image et/ou du calculateur 207 et/ou du capteur 205. Cette étape E1bis de lecture de l'identifiant ID unique du plateau 10 de calibration et/ou des coordonnées absolues X3, Y3 du au moins un marquage 30 de référence dans la puce NFC et/ou RFID 211 par le lecteur NFC et/ou RFID 310 peut être prévue entre les étapes E1 et E2 décrites en référence à la figure 9, notamment entre l'étape E1 et l'étape E11.

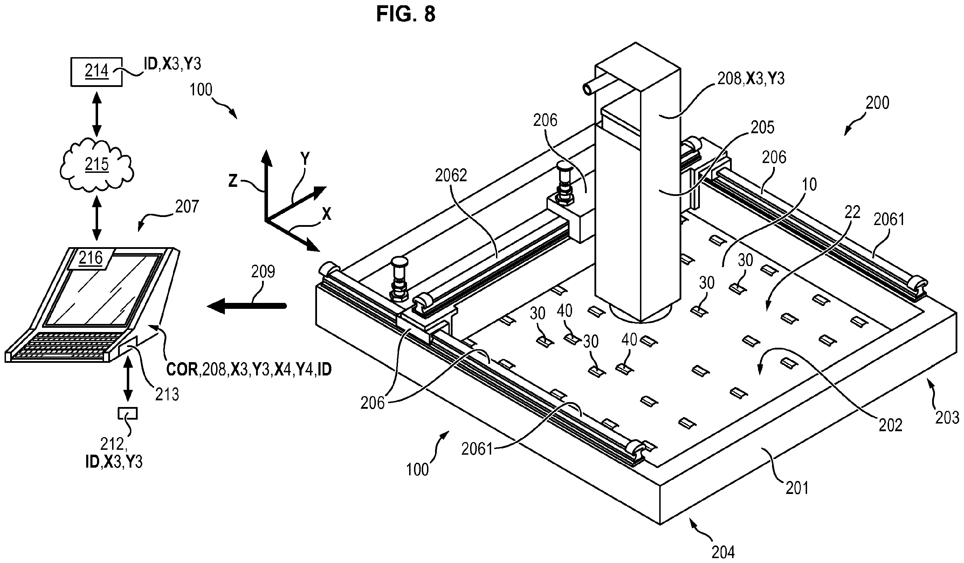

Suivant un mode de réalisation de l'invention, illustré à la figure 8, le kit 100 comporte en outre un support 212 de stockage amovible, qui est distinct de la première mémoire 208 et dans lequel sont enregistrés l'identifiant ID unique déterminé du plateau 10 de calibration et les coordonnées absolues X3, Y3 du au moins un marquage 30 de référence, lesquelles sont associées à l'identifiant ID unique déterminé du plateau 10 de calibration. Le support 212 de stockage amovible peut être par exemple du type clé USB ou mémoire USB ou du type disque externe. L'appareil 200 de capture d'image et/ou le calculateur 207 comporte une interface 213 permettant de lire dans le support 212 de stockage amovible l'identifiant ID unique déterminé du plateau 10 de calibration et/ou les coordonnées absolues X3, Y3 du au moins un marquage 30 de référence, associées à l'identifiant ID unique déterminé du plateau 10 de calibration, pour les enregistrer dans la première mémoire 208. L'interface 213 pouvant être par exemple une prise USB dans laquelle peut être enfichée le support 212 de stockage amovible dans le cas où ce support 212 est du type clé USB ou mémoire USB. L'interface 213 peut être par exemple un lecteur de disque dans le cas où le support 212 de stockage amovible est du type disque externe. Cette étape E1 bis de lecture de l'identifiant ID unique du plateau 10 de calibration et/ou des coordonnées absolues X3, Y3 du au moins un marquage 30 de référence dans le support 212 de stockage amovible par l'interface 213 peut être prévue entre les étapes E1 et E2 décrites en référence à la figure 9, notamment entre l'étape E1 et l'étape E11.

Suivant un mode de réalisation de l'invention, illustré à la figure 8, l'appareil 200 de capture d'image et/ou le calculateur 207 comporte une interface 216 (port physique de communication) permettant de communiquer par l'intermédiaire d'un réseau 215 de télécommunication avec un serveur distant 214, dans lequel sont enregistrés l'identifiant ID unique du plateau 10 de calibration et/ou des coordonnées absolues X3, Y3 du au moins un marquage 30 de référence, qui sont associées à l'identifiant ID unique déterminé du plateau 10 de calibration. Le procédé de claibration comporte en outre, entre le positionnement E1 du plateau 10 de calibration amovible dans l'appareil 302 de fabrication additive et la commande E2 du système 300 de tir du au moins un faisceau F de rayonnement incident de puissance de l'appareil 302 de fabrication additive selon la commande de visée du système 300 de tir (et notamment entre l'étape E1 et l'étape E11), l'étape intermédiaire E1 bis de lecture de l'identifiant ID unique du plateau 10 de calibration et/ou des coordonnées absolues X3, Y3 du au moins un marquage 30 de référence dans le serveur 214 distant par l'interface 216, ainsi que représenté à la figure 9.

Suivant un mode de réalisation de l'invention, dans la couche 22 de gravage laser se trouve le ou les marquages 40 de test obtenu par destruction locale de la au moins une couche 22 de gravage laser, en plus du ou des marquages 30 de référence. Suivant un mode de réalisation de l'invention, lors d'une autre étape E1, E2 postérieure à l'étape préalable E0, on positionne le plateau 10 de calibration ayant déjà le ou les marquages 30 de référence sur l'appareil 302 de fabrication additive et on effectue par le système 300 de tir de cet appareil 302 de fabrication additive un ou plusieurs tirs d'un ou plusieurs faisceaux laser incidents F de puissance sur le dessus de la couche 22 de gravage laser pour y réaliser le ou les marquages 40 de test, et ce par destruction de cette couche 22 au niveau du ou des points PI d'impact du ou des faisceaux laser incidents F de puissance sur cette couche 22 de gravage laser. L'appareil 302 de fabrication additive servant à réaliser l'étape E2 de réalisation du ou des marquages 40 de test peut être distinct de celui ayant servi à réaliser l'étape préalable E0 de réalisation du ou des marquages 30 de référence. Par exemple, l'appareil 302 de fabrication additive servant à réaliser l'étape E2 de réalisation du ou des marquages 40 de test peut être celui de l'utilisateur final du plateau 10 de calibration, tandis que l'appareil 302 de fabrication additive servant à réaliser l'étape préalable E0 de réalisation du ou des marquages 30 de référence peut être effectuée par le fournisseur du ou des plateaux 10 de calibration, ayant fourni ce ou ces plateaux 10 de calibration à cet utilisateur.

Suivant un mode de réalisation de l'invention, dans la couche 22 de gravage laser se trouve au moins une mire 50 de positionnement de dimensions supérieures aux dimensions du au moins un marquage 30 de référence et/ou aux dimensions du au moins un marquage 40 de test. La mire 50 de positionnement peut être visible à l'œil nu. La mire 50 de positionnement peut comporter plusieurs motifs, par exemple rectangulaires, situés l'un dans l'autre, et par exemple espacés l'un de l'autre d'un même pas non nul. La mire 50 de positionnement permet de mesurer grossièrement l'écart de centrage de chaque capteur 205. La mire 50 de positionnement peut servir de repérage visuel direct à l'œil nu sur le plateau 10 de calibration.

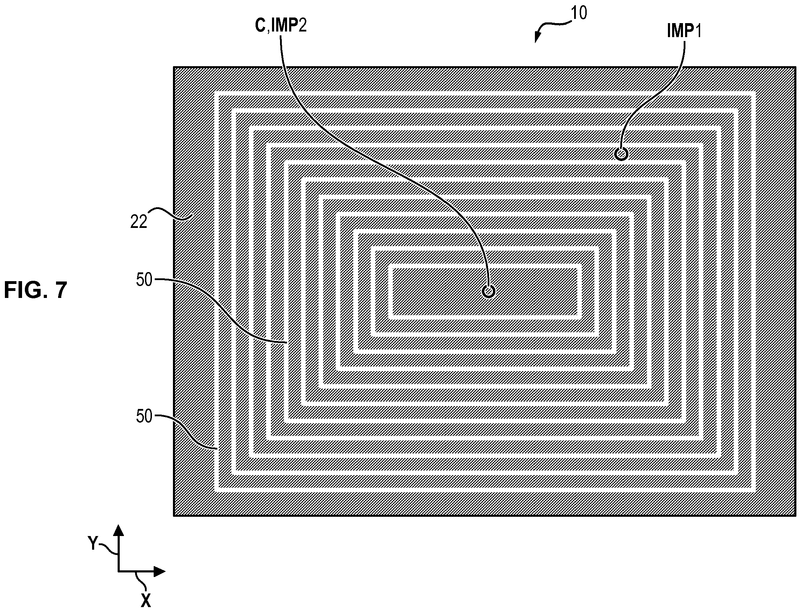

Suivant un mode de réalisation, la mire 50 de positionnement est utilisée pour prépositionner/précorriger manuellement la position du faisceau F. Suivant un mode de réalisation, on réalise une procédure de positionnement grossier du système 300 de tir de l'appareil 302 de fabrication additive sur la mire 50, par exemple de la manière suivante, illustrée à la figure 9. On vise au cours d'une étape E11 (postérieure à l'étape E1 et antérieure à l'étape E2) par le système 300 de tir de l'appareil 302 de fabrication additive la mire 50 avec un autre faisceau laser en lumière visible, qui est coaxial au faisceau laser F de puissance dans l'appareil 302 de fabrication additive et qui ne sert pas au marquage des marquages 30, 40 dans la couche 22 de gravage laser (cet autre faisceau laser est de puissance plus faible que le faisceau laser F de puissance), sans émettre le faisceau laser F de puissance et donc sans destruction locale de la couche 22 de gravage par cet autre faisceau laser). Puis, au cours d'une étape E12 (postérieure à l'étape E1 et antérieure à l'étape E2), on relève grossièrement et manuellement à l'œil nu avec une règle graduée (ou tout autre outillage de mesure visuelle de distance à l'œil nu ou avec le dispositif de relevé visuel de distance à l'œil nu décrit ci-dessous) sur le plateau 10 de calibration l'écart de centrage (au mm) d'un premier impact IMP1 de l'autre faisceau laser par rapport à sa position théorique prévue au centre C de la mire 50, ainsi qu'illustré à titre d'exemple à la figure 7. Le dispositif de relevé visuel de distance à l'œil nu peut être les motifs précités de la mire 50 de positionnement, à l'aide desquels on peut mesurer à l'œil nu la distance entre le premier impact IMP1 et le centre C situé au centre de ces motifs en comptant le nombre de motifs présents entre le centre C et le premier impact IMP1. Puis, au cours d'une étape E13 (postérieure à l'étape E1 et antérieure à l'étape E2), on modifie la commande du système 300 de tir de l'autre faisceau laser de l'appareil 302 de fabrication additive (on applique une correction COR2 de décalage à la commande du système 300 de tir suivant les coordonnées X et Y, cette correction COR2 étant égale à l'opposé de l'écart de centrage, pour corriger cet écart de centrage entre le premier impact IMP1 et le centre C), pour que le deuxième impact IMP2 de l'autre faisceau laser ainsi généré sur le plateau 10 de calibration soit présent au centre C de la mire 50. La commande ainsi modifiée ou la correction COR2 de décalage de la commande est enregistrée dans une mémoire du système 300 de tir ou de l'appareil 302 de fabrication additive et/ou dans une autre mémoire de l'appareil 200 de capture d'image et/ou dans une autre mémoire du calculateur 207, pour être appliquée aux commandes ultérieures du système 300 de tir avec le faisceau incident F de rayonnement de puissance (par exemple à l'étape E2). Cela permet de préparer le système pour que le reste de la méthode soit dans des limites correctes (pas de chevauchement des marquages 40 de test sur les marquages 30 de référence). Cela permet de s'assurer qu'une prise d'image contenant simultanément dans une seule et même image un marquage 30 de référence d'un plateau 10 de calibration et tous ses marquages 40 associés de test de ce plateau 10 de calibration est possible. En outre, suivant un mode de réalisation, une correction de décalage suivant la direction Z normale aux directions X et Y doit être effectuée sur la commande du système 300 de tir du faisceau incident F de rayonnement de puissance. Cette correction en Z peut utiliser une estimation visuelle de la focalisation suite à des tirs d'essai par le système 300 de tir du faisceau incident F de rayonnement de puissance. La mire de (pré)positionnement 50 permet une précorrection « manuelle » évitant un positionnement ou référencement très précis du plateau 10 de calibration dans la machine. Grâce à cette mire 50 de positionnement, les plateaux prémarqués (avec les marquages de référence imprimés au préalable) sont plus facilement utilisables.

On décrit plus en détail ci-dessous l'appareil 200 amovible de capture d'au moins une image suivant un mode de réalisation de l'invention en référence aux figures 5 et 8. Le plateau 10 de calibration peut être placé dans l'appareil 200 de capture d'image pour réaliser une image du ou des marquages 30 de référence du plateau 10 de calibration et du ou des marquages 40 de test de ce plateau 10 de calibration. L'appareil 200 de capture d'image est configuré pour comparer le ou les marquages 30 de référence du plateau 10 de calibration au(x) marquage(s) 40 de test de ce plateau 10 de calibration. L'appareil 200 de capture d'image est autonome, tranportable et séparé du système 300 de tir du au moins un faisceau laser incident F de puissance de l'appareil 200 de fabrication additive.

L'appareil 200 de capture d'image comporte un boîtier comportant un cadre 201 délimitant une ouverture 202 de réception, dans laquelle peut être inséré le plateau 10 de calibration. Le plateau 10 de calibration est placé dans l'ouverture 202 en orientant vers le haut la couche 22 de gravage laser comportant le ou les marquages 30 et/ou 40 et/ou la mire 50 et en orientant vers le bas la face inférieure 23. L'appareil 200 de capture d'image comporte des organes 203 de maintien du plateau 10 de calibration dans l'ouverture 202. Ces organes 203 de maintien comprennent par exemple un support 203 ou une table plane 203 rétroéclairée, sur lequel ou laquelle peut être positionnée la face inférieure 23 du plateau 10 de calibration, ainsi qu'illustré à la figure 8.

L'appareil 200 de capture d'image comporte une ou plusieurs sources 204 de lumière visible de rétroéclairage. La ou les sources 204 de lumière visible de rétroéclairage sont situées sous l'ouverture 202, pour envoyer la lumière visible de rétroéclairage par le dessous vers le haut et vers la face inférieure 23 du plateau 10 de calibration, lorsque ce plateau 10 de calibration est positionné dans l'ouverture 202 avec sa face inférieure 23 tournée vers le bas et vers la ou les sources 204. La ou les sources 204 de lumière visible de rétroéclairage peut se trouver dans ou sous la table rétroéclairée 203. L'appareil 200 de capture d'image comporte le capteur 205 permettant d'acquérir une ou plusieurs images éclairées par la lumière visible de rétroéclairage envoyée par la ou les sources 204. Le capteur 205 peut être un capteur optique et comporter une caméra, un appareil photographique ou autres. L'appareil 200 de capture d'image comporte un dispositif 206 de guidage et de support pour positionner le capteur 205 au-dessus de l'ouverture 202 par rapport au cadre 201. Le dispositif 206 de guidage et de support permet de déplacer le capteur 205 au-dessus de l'ouverture 202 et donc au-dessus de la couche 22 supérieure de gravage laser du plateau 10 de calibration comportant le ou les marquages 30 et/ou 40 et/ou la mire 50, lorsque le plateau 10 de calibration y est placé. Le dispositif 206 de guidage et de support permet de déplacer le capteur 205 au-dessus de l'ouverture 202 par exemple suivant les deux directions horizontales X et Y perpendiculaires entre elles. Le dispositif 206 de guidage et de support peut être manuel ou automatisé.

Suivant un mode de réalisation de l'invention, le dispositif 206 de guidage et de support peut comporter un ou plusieurs premier(s) rail(s) 2061 de coulissement suivant la direction horizontale X des abscisses, fixés sur le cadre 201, ainsi qu'un ou plusieurs deuxième(s) rail(s) 2062 montés coulissants suivant la direction horizontale X sur le ou les premier(s) rail(s) 2061. Le deuxième(s) rail(s) 2062 s'étend suivant la direction Y des ordonnées. Le capteur 205 est monté coulissant suivant la direction Y sur le ou les deuxième(s) rail(s) 2062.

Ainsi, lorsque le plateau 10 de calibration est positionné dans l'ouverture 202, la source 204 de lumière visible de rétroéclairage envoie la lumière visible de rétroéclairage de bas en haut, vers l'ouverture 200 et vers le dessous de la face inférieure 23, puis au travers de la plaque 20 de verre, puis au travers du ou des marquages 30 de référence et/ou du ou des marquages 40 de test. La qualité de la détection du ou des marquages 30 de référence et/ou du ou des marquages 40 de test dans l'image acquise par le capteur 205 n'est donc plus tributaire de l'appareil 302 de fabrication additive et peut être améliorée en utilisant l'appareil 200 de capture d'image.

L'appareil 200 de capture d'image peut faire partie d'un kit transportable 100 de calibration, lequel comporte en plus un ou plusieurs plateaux 10 de calibration comportant chacun leur(s) marquage 30 de référence. Ainsi, l'appareil 200 de capture d'image peut être fourni avec le ou plateaux 10 de calibration par le fournisseur à l'utilisateur final de l'appareil 302 de fabrication additive. Un avantage est ainsi que le kit peut être stocké ailleurs que dans la zone où se trouve le matériau pulvérulent servant à l'appareil 302 de fabrication additive.

L'appareil 200 de capture d'image comporte un calculateur 207 configuré pour analyser la ou les une image acquise par le capteur 205, reconnaître le ou les marquages 30 de référence et le ou les marquages 40 de test dans la ou les image acquise par le capteur 205. Le calculateur 207 peut être ou comprendre un ordinateur, un processeur, un microprocesseur et des programmes informatiques de traitement automatique d'images et de reconnaissance de forme, enregistrés sur un support permanent lisible par le calculateur, tel que par exemple la mémoire permanente 208. Le calculateur 207 peut être connecté au capteur 205 par un dispositif 209 de transmission, pour que la ou les image acquise par le capteur 205 soit envoyée au calculateur 207 ou copiée dans le calculateur 207, le dispositif 209 de transmission pouvant être du type filaire ou sans fil. Le calculateur 207 est configuré pour calculer des corrections COR de commande de visée du système 300 de tir en fonction au moins des coordonnées X4, Y4 du ou des marquages 40 de test par rapport au(x) marquage(s) 30 de référence, ayant été reconnus par le calculateur 207 dans l'image. Ces corrections COR peuvent être un premier décalage à appliquer selon la direction X des abscisses et/ou un deuxième décalage à appliquer selon la direction Y des ordonnées.

Suivant un mode de réalisation de l'invention, le kit transportable 100 de calibration et/ou l'appareil 200 de capture d'image et/ou le calculateur 207 et/ou le capteur 205 comporte la mémoire permanente 208 et/ou 210 dans laquelle sont préenregistrées les coordonnées absolues X3, Y3 du ou des marquages 30 de référence de chaque plateau 10 de calibration, ces coordonnées ayant été déterminées au préalable.

Suivant un mode de réalisation de l'invention, le calculateur 207 est configuré pour calculer les corrections COR de commande de visée du système 300 de tir du faisceau laser incident F de puissance de l'appareil 302 de fabrication additive en fonction des coordonnées X4, Y4 du ou des marquages 40 de test calculées pour le ou les marquages 30 de référence et en fonction des coordonnées absolues X3, Y3 du ou des marquages 30 de référence.

On décrit ci-dessous en référence à la figure 9 un procédé de calibration suivant un mode de réalisation de l'invention, pour calibrer le système 300 de tir d'au moins un faisceau laser incident F de puissance de l'appareil 302 de fabrication additive, en utilisant au moins un plateau 10 de calibration amovible suivant l'invention, comportant à l'avance le ou les marquages 30 de référence. Ce procédé de calibration comporte les étapes décrites ci-dessous et peut être effectué par l'utilisateur final ayant reçu le plateau 1 de calibration et/ou le kit 100 de calibration, pour calibrer son propre appareil 302 de fabrication additive.

Au cours d'une première étape E1, l'utilisateur positionne le plateau 10 de calibration amovible dans l'appareil 302 de fabrication additive. Dans cette position, la (ou les) couche 22 supérieure de gravage laser du plateau 10 de calibration amovible comportant le ou les marquages 30 de référence est orientée vers le côté 304 d'émission du (ou des) faisceau laser incident F de puissance du système 300 de tir, tandis que la face inférieure 23 est plus éloignée du côté 304 d'émission du (ou des) faisceau laser incident F de puissance du système 300 de tir que ne l'est la (ou les) couche 22 supérieure de gravage laser. Cette première étape E1 est donc postérieure à l'étape préalable E0 décrite ci-dessus.

Au cours d'une deuxième étape E2 postérieure à la première étape E1, l'utilisateur commande le système 300 de tir du (ou des) faisceau laser incident F de puissance de l'appareil 302 de fabrication additive, selon une commande de visée du système 300 de tir, déterminée par rapport au(x) marquage(s) 30 de référence, pour émettre le (ou les) faisceau laser incident F de puissance depuis le côté 304 d'émission sur la couche 22 de gravage laser du plateau 10 de calibration amovible, pour y former le ou les marquage 40 de test par destruction locale de la couche 22 de gravage laser. Il peut être réalisé un marquage 40 de test pour chaque marquage 30 de référence. Il peut être réalisé une pluralité de marquages 40 de test situés à distance les uns des autres pour une pluralité de marquages 30 de référence situés à distance les uns des autres. Chaque marquage 40 de test peut être un motif de points centré sur un point cible théorique prédéterminé 14 (représenté par une croix 14 à la figure 10 et non présent sur le plateau 10). Le système 300 de tir peut être commandé pour réaliser, pour chaque marquage 30 de référence, un (ou plusieurs) tir sur la position cible théorique 14 donnée à proximité du marquage 30 de référence correspondant. Le marquage 40 de test peut être effectué sur le plateau 10 à proximité de la position cible théorique donnée 14, afin d'améliorer le repérage de la position du tir et donc la précision de la calibration. Comme illustré en figure 6, le marquage 40 de test peut être centré sur la position cible théorique donnée 14 et peut constituer en un carré encadrant la position cible théorique donnée du tir, le carré pouvant être entouré d'une croix formée de traits horizontaux et verticaux. Le tir du marquage 40 de test peut se faire selon une succession de plusieurs points de tirs répartis selon un motif de tir prédéfini (motif matriciel 40 de 7x7 points dans l'exemple de la figure 10).

Au cours d'une troisième étape E3 postérieure à la deuxième étape E2, l'utilisateur enlève de l'appareil 302 de fabrication additive le plateau 10 de calibration amovible.

Au cours d'une quatrième étape E4 postérieure à la troisième étape E3, l'utilisateur déplace le plateau 10 de calibration amovible jusqu'à l'appareil 200 de capture d'image, lequel est transportable et séparé du système 300 de tir du au moins un faisceau laser incident F de puissance de l'appareil 302 de fabrication additive.

Au cours d'une cinquième étape E5 postérieure à la quatrième étape E4, l'utilisateur positionne le plateau 10 de calibration amovible dans l'ouverture 202 de l'appareil 200 de capture d'image, distant de et non rapporté sur l'appareil 302 de fabrication additive.

Au cours d'une sixième étape E6 postérieure à la cinquième étape E5, l'utilisateur commande la (ou les) source 204 de lumière visible de rétroéclairage de l'appareil 200 de capture d'image pour que la lumière visible de rétroéclairage traverse dans l'ouverture 202 depuis la face inférieure 23 la plaque 20 de verre, le (ou les) marquage 30 de référence et le (ou les) marquage 40 de test, ainsi que décrit ci-dessus.

Au cours d'une septième étape E7 postérieure à la sixième étape E6, l'utilisateur commande l'appareil 200 de capture d'image pour que le capteur 205 acquière une (ou plusieurs) image d'une zone de la couche 22 supérieure de gravage laser, dans laquelle se trouve le (ou les) marquage 30 de référence et le (ou les) marquage 40 de test dans la lumière visible de rétroéclairage envoyée par la source 204.

Entre la sixième étape E6 et la septième étape E7 peut être effectuée une sous-étape E60, au cours de laquelle le capteur 205 est déplacé par le dispositif 206 de guidage et de support par rapport au plateau 1 de calibration, par exemple pour viser une zone déterminée de la couche supérieure 22 comportant à la fois au moins un marquage 30 de référence et au moins un marquage 40 de test.

Au cours d'une huitième étape E8 postérieure à la septième étape E7, le calculateur 207 de l'appareil 200 de capture d'image analyse la (ou les) image acquise par le capteur 205. Le calculateur 207 reconnaît par traitement automatique d'image le (ou les) marquage 30 de référence et le (ou les) marquage 40 de test dans la (ou les) image acquise, et calcule automatiquement des coordonnées X4, Y4 du (ou des) marquage 40 de test par rapport aux coordonnées calculées du (ou des) marquage 30 de référence reconnu dans la (ou les) image acquise et/ou par rapport aux coordonnées absolues X3, Y3 du (ou des) marquage 30 de référence reconnu dans la (ou les) image acquise.

Au cours d'une neuvième étape E9 postérieure à la huitième étape E8, le calculateur 207 calcule les corrections COR de commande de visée du système 300 de tir du au moins un faisceau laser incident F de puissance de l'appareil 302 de fabrication additive en fonction au moins des coordonnées X4, Y4 du (ou des) marquage 40 de test calculées pour le (ou les) marquage 30 de référence. Le calculateur 207 enregistre dans la mémoire 208 de l'appareil 200 de capture d'image ces corrections COR de commande de visée du système 300 de tir du au moins un faisceau laser incident F de puissance de l'appareil 302 de fabrication additive.

L'invention permet ainsi de calibrer une ou plusieurs sources laser de façon autonome et garantissant une précision absolue d'écart des marquages 40 de test par rapport au positionnement théorique, inférieure à 35 µm et ceci pour tout point de la plateforme de fabrication. L'invention sert également à calibrer une ou plusieurs sources de faisceau(x) F par rapport à une même référence, ce qui apporte la fonctionnalité multi-laser sur une même pièce. L'écart maximum relatif entre les sources de faisceaux F en positionnement et à tout point de la plateforme est assuré inférieur à 35 µm.

Suivant un mode de réalisation de l'invention, pour chaque marquage 30 de référence, l'image acquise de la zone autour de celui-ci est traitée par le calculateur 207 pour en déduire la position C40 du centre (point milieu) du marquage 40 de test dans le repère orthonormé dudit marquage 30 de référence (mesures de position Xₘ et Yₘ dans l'exemple de la figure 10) et par conséquent le décalage de cette position C40 par rapport à la position cible théorique 14, pour calculer les corrections COR égales à ce décalage çà retirer.

Suivant un mode de réalisation de l'invention, les marquages 30 de référence ont simultanément les mêmes orientations dans les repères image et le référentiel des marquages 30 de référence de chaque plateau 10 de calibration.

Suivant un mode de réalisation de l'invention, le calculateur 207 est configuré pour enregistrer les corrections COR de commande de visée dans la mémoire 208 en association avec l'identifiant ID du plateau 10 de calibration amovible et avec les coordonnées absolues X3, Y3 du (ou des) marquage 30 de référence. Ces corrections COR de commande de visée peuvent être sous la forme d'une table de correction.

Suivant un mode de réalisation de l'invention, les corrections COR de commande de visée sont enregistrées dans une mémoire du système 300 de tir du au moins un faisceau F de rayonnement incident de puissance de l'appareil 302 de fabrication additive au cours de la neuvième étape E9.

Suivant un mode de réalisation de l'invention, au cours d'une dixième étape E10 postérieure à la neuvième étape E9, l'utilisateur commande le système 300 de tir du (ou des) faisceau laser incident F de puissance de l'appareil 302 de fabrication additive, selon une commande de visée du système 300 de tir corrigée par les corrections COR de commande de visée, pour réaliser un (ou plusieurs) tir du (ou des) faisceau laser incident F de puissance de l'appareil 302 de fabrication additive depuis le côté 304 d'émission, sur le plateau 10 de calibration ou sur un autre plateau 10 de calibration pour y former un (ou plusieurs) autre marquage 40 de test par destruction locale de la couche 22 de gravage laser, ou sur le plan de travail P (couche de matériau pulvérulent) pour réaliser la fabrication additive d'un objet.

Suivant un mode de réalisation de l'invention, un identifiant ID2 individuel d'un marquage 30 de référence peut être présent sur le plateau 10 dans ce marquage 30 de référence, , ainsi qu'illustré par exemple à la figure 6 montrant l'identifiant ID2 formé par le motif dessinant le nombre 12. Il peut être prévu plusieurs identifiants ID2 individuels, différents l'un de l'autre, pour plusieurs ou tous les marquages 30 de référence. Cet identifiant ID2 individuel est ainsi lisible dans l'image acquise par l'appareil 200 de capture d'image, pour servir à reconnaître quel marquage 30 de référence est présent dans l'image, lorsque le plateau 10 comporte plusieurs marquages 30 de référence. Suivant un mode de réalisation de l'invention, le marquage 40 de test gravé dans la couche 22 de gravage du plateau 10 de calibration peut comporter un autre identifiant ID40 du marquage 40 de test. Ainsi, lorsqu'une pluralité de marquages 40 de test situés à distance les uns des autres sont gravés à proximité d'une pluralité de marquages 30 de référence situés à distance les uns des autres sur le même plateau 10 de calibration, les autres identifiants ID40 du marquage 40 de test sont différents les uns des autres. Par exemple, à la figure 6, cet autre identifiant ID40 du marquage 40 de test peut être plusieurs points en nombres différents pour les différents marquages 40 de test. Par exemple, suivant un mode de réalisation, on identifie différents marquages 40 de test autour de chaque marquage 30 de référence du plateau 10 quand on calibre différentes sources de faisceaux lasers F incidents de puissance et donc différents faisceaux lasers F incidents de puissance du système 300 de tir, avec un même plateau 10 de calibration. Suivant un mode de réalisation, ces différents marquages 40 de test autour d'un même marquage 30 de référence sont donc issus de différentes sources lasers du système 300 de tir, qui doivent chacune être calibrées différemment. Ces différents identifiants ID40 permettent dans ces cas d'identifier les différentes sources de faisceaux lasers F incidents de puissance.

## Revendications

1. Appareil amovible (200) de capture d'au moins une image,
l'appareil (200) de capture d'image comportant :
un boîtier (201) comportant un cadre (201) délimitant une ouverture (202) destinée à recevoir un plateau (10) de calibration portant au moins un marquage (30) de référence et éventuellement au moins un marquage (40) de test,
des organes (203) de maintien du plateau (1) de calibration dans l'ouverture (202),
**caractérisé en ce que** l'appareil (200) de capture d'image comporte en outre :
au moins une source (204) de lumière visible de rétroéclairage située sous l'ouverture (202),
un capteur (205) pour acquérir au moins une image en lumière visible de rétroéclairage du plateau (10) de calibration,
un dispositif (206) de guidage et de support pour positionner le capteur (205) au-dessus de l'ouverture (202) par rapport au cadre (201),
un calculateur (207) configuré pour analyser la au moins une image acquise par le capteur (205), reconnaître le au moins un marquage (30) de référence et éventuellement le au moins un marquage (40) de test dans la au moins une image acquise par le capteur (205), et calculer des corrections (COR) de commande de visée, destinées à un système (300) de tir d'au moins un faisceau (F) de rayonnement incident de puissance d'un appareil (302) de fabrication additive, séparé et distinct de l'appareil (200) de capture d'image,
l'appareil (200) de capture d'image et/ou le calculateur (207) comportant une première mémoire (208) dans laquelle sont préenregistrées, en association avec un identifiant (ID) unique déterminé du plateau (10) de calibration, des coordonnées absolues (X3, Y3) du au moins un marquage (30) de référence, ayant été déterminées au préalable,
le calculateur (207) étant configuré pour calculer les corrections (COR) de commande de visée du système (300) de tir du au moins un faisceau (F) de rayonnement incident de puissance de l'appareil (302) de fabrication additive, en fonction de coordonnées (X4, Y4) du au moins un marquage (40) de test calculées pour le au moins un marquage (30) de référence et en fonction des coordonnées absolues (X3, Y3) du au moins un marquage (30) de référence.

2. Kit transportable (100) de calibration, comportant l'appareil (200) de capture d'au moins une image suivant la revendication 1 et au moins un plateau (1) de calibration amovible,
le plateau (1) de calibration amovible étant apte à être positionné dans le champ d'un système (300) de tir d'au moins un faisceau (F) de rayonnement incident de puissance d'un appareil (302) de fabrication additive,
le plateau (10) de calibration amovible comportant une plaque (20),
la plaque (20) comportant une face supérieure (21) destinée à être tournée vers le faisceau (F) de rayonnement incident de puissance, la plaque (2) portant le au moins un marquage (30) de référence et étant destinée à recevoir au moins un marquage (40) de test, et une face inférieure (23), qui est éloignée par rapport à la face supérieure (21) suivant le sens de l'épaisseur de la plaque (20),
le plateau (10) de calibration amovible comporte au moins une couche (22) de gravage par faisceau (F) de rayonnement incident de puissance,
la au moins une couche (22) de gravage par faisceau (F) de rayonnement incident de puissance étant solidaire de la face supérieure (21) de la plaque (20) et étant opaque à de la lumière visible,
la au moins une couche (22) de gravage par faisceau (F) de rayonnement incident de puissance étant apte à être détruite localement par le faisceau (F) de rayonnement incident de puissance pour former éventuellement le au moins un marquage (40) de test,
la plaque (20) étant transparente à la lumière visible,
la face inférieure (23) de la plaque (20) étant dépolie.

3. Kit amovible (100) de calibration suivant la revendication 2, **caractérisé en ce que** la face inférieure (23) de la plaque (20) est transparente à de la lumière visible de rétroéclairage.

4. Kit amovible (100) de calibration suivant la revendication 2 ou 3, **caractérisé en ce que** le au moins un marquage (30) de référence est réalisé par destruction locale de la au moins une couche (22) de gravage par le faisceau (F) de rayonnement incident de puissance.

5. Kit amovible (100) de calibration suivant l'une quelconque des revendications 2 à 4, **caractérisé en ce que** dans la au moins une couche (22) de gravage par faisceau (F) de rayonnement incident de puissance se trouve au moins une mire (50) de positionnement de dimensions supérieures aux dimensions du au moins un marquage (30) de référence et/ou aux dimensions du au moins un marquage (40) de test.

6. Kit amovible (100) de calibration suivant l'une quelconque des revendications 2 à 5, **caractérisé en ce que** la au moins une couche (22) de gravage par faisceau (F) de rayonnement incident de puissance est au moins une couche (22) de gravage par faisceau (F) de rayonnement laser incident de puissance.

7. Kit amovible (100) de calibration suivant l'une quelconque des revendications 2 à 6, **caractérisé en ce que** la plaque (20) comprend du verre ou est en verre.

8. Kit amovible (100) de calibration suivant l'une quelconque des revendications 2 à 7, **caractérisé en ce que** le plateau (1) de calibration comporte le au moins un marquage (40) de test réalisé par destruction locale de la au moins une couche (22) de gravage par le faisceau (F) de rayonnement incident de puissance.

9. Kit amovible (100) de calibration suivant l'une quelconque des revendications 2 à 8, **caractérisé en ce que** dans la au moins une couche (22) de gravage par faisceau (F) de rayonnement incident de puissance se trouvent le au moins un marquage (30) de référence réalisé par destruction locale de la au moins une couche (22) de gravage par le faisceau (F) de rayonnement incident de puissance et le au moins un marquage (40) de test réalisé par destruction locale de la au moins une couche (22) de gravage par le faisceau (F) de rayonnement incident de puissance.

10. Kit amovible (100) de calibration suivant la revendication 8 ou 9, **caractérisé en ce que** le au moins un marquage (40) de test présent dans la couche (22) de gravage par faisceau (F) de rayonnement incident de puissance comporte un identifiant (ID40) du marquage (40) de test.

11. Kit amovible (100) de calibration suivant l'une quelconque des revendications 2 à 10, **caractérisé en ce que** le kit comporte en outre un support (212) de stockage amovible, qui est distinct de la première mémoire (208) et dans lequel sont enregistrés l'identifiant (ID) unique déterminé du plateau (10) de calibration et les coordonnées absolues (X3, Y3) du au moins un marquage (30) de référence, associées à l'identifiant (ID) unique déterminé du plateau (10) de calibration, l'appareil (200) de capture d'image et/ou le calculateur (207) comportant une interface (213) permettant de récupérer dans le support (212) de stockage amovible l'identifiant (ID) unique déterminé du plateau (10) de calibration et/ou les coordonnées absolues (X3, Y3) du au moins un marquage (30) de référence, associées à l'identifiant (ID) unique déterminé du plateau (10) de calibration, pour les enregistrer dans la première mémoire (208).

12. Kit amovible (100) de calibration suivant l'une quelconque des revendications 2 à 10, **caractérisé en ce que** le plateau (10) de calibration amovible comporte au moins une deuxième mémoire permanente (210), dans laquelle sont enregistrées l'identifiant (ID) unique du plateau (10) de calibration et les coordonnées absolues (X3, Y3) du au moins un marquage (30) de référence, qui sont associées à l'identifiant (ID) unique du plateau (10) de calibration,
la au moins une deuxième mémoire permanente (210) du plateau (10) de calibration amovible est sous la forme d'une puce NFC et/ou RFID (211), fixée au plateau (10) de calibration amovible,
l'appareil (200) de capture d'image et/ou le calculateur (207) et/ou le capteur (205) comporte un lecteur NFC et/ou RFID (310), apte à lire dans la puce NFC et/ou RFID (211) l'identifiant (ID) unique du plateau (10) de calibration et/ou les coordonnées absolues (X3, Y3) du au moins un marquage (30) de référence, pour les enregistrer dans la première mémoire (208).

13. Procédé de calibration d'un système (300) de tir d'au moins un faisceau (F) de rayonnement incident de puissance d'un appareil (302) de fabrication additive à l'aide du kit amovible (100) de calibration suivant l'une quelconque des revendications 2 à 12,
**caractérisé en ce que** le procédé de calibration comporte les étapes suivantes :
positionnement (E1) du plateau (10) de calibration amovible dans l'appareil (302) de fabrication additive, la au moins une couche (22) de gravage par faisceau (F) de rayonnement incident de puissance du plateau (10) de calibration amovible étant orientée vers un côté (304) d'émission du au moins un faisceau (F) de rayonnement incident de puissance du système (300) de tir de l'appareil (302) de fabrication additive,
commande (E2) du système (300) de tir du au moins un faisceau (F) de rayonnement incident de puissance de l'appareil (302) de fabrication additive, selon une commande de visée du système (300) de tir, déterminée par rapport au au moins un marquage (30) de référence, pour émettre le au moins un faisceau (F) de rayonnement incident de puissance depuis le côté (304) d'émission sur la au moins une couche (22) de gravage du plateau (10) de calibration amovible, pour y former le au moins un marquage (40) de test par destruction locale de la couche (22) de gravage,
extraction (E3) du plateau (10) de calibration amovible hors de l'appareil (302) de fabrication additive,
déplacement (E4) du plateau (10) de calibration amovible jusqu'à l'appareil (200) de capture d'au moins une image, transportable et séparé du système (300) de tir du au moins un faisceau (F) de rayonnement incident de puissance de l'appareil (302) de fabrication additive,
positionnement (E5) du plateau (10) de calibration amovible dans l'ouverture (202) de l'appareil (200) de capture d'image,
commande (E6) de la au moins une source (204) de lumière visible de rétroéclairage de l'appareil (200) de capture d'image pour que la lumière visible de rétroéclairage traverse dans l'ouverture (202), depuis la face inférieure (23), la plaque (20), le au moins un marquage (30) de référence et le au moins un marquage (40) de test,
acquisition (E7), par le capteur (205), d'au moins une image d'une zone dans laquelle se trouve le au moins un marquage (30) de référence et le au moins un marquage (40) de test en lumière visible de rétroéclairage,
analyse (E8), par un calculateur (207) de l'appareil (200) de capture d'image, de la au moins une image acquise par le capteur (205), et reconnaissance du au moins un marquage (30) de référence et du au moins un marquage (40) de test dans la au moins une image acquise, pour calculer des coordonnées (X4, Y4) du au moins un marquage (40) de test par rapport au au moins un marquage (30) de référence,
calcul et enregistrement (E9) dans la première mémoire (208) de l'appareil (200) de capture d'image, par le calculateur (207) de l'appareil (200) de capture d'image, des corrections (COR) de commande de visée du système (300) de tir du au moins un faisceau (F) de rayonnement incident de puissance de l'appareil (302) de fabrication additive en fonction au moins des coordonnées (X4, Y4) du au moins un marquage (40) de test calculées pour le au moins un marquage (30) de référence.

14. Procédé de calibration suivant la revendication 13, **caractérisé en ce que** les corrections (COR) de commande de visée sont enregistrées (E9) dans la première mémoire (208) en association avec l'identifiant (ID) du plateau de calibration amovible et avec les coordonnées absolues (X3, Y3) du au moins un marquage (30) de référence.

15. Procédé de calibration suivant la revendication 13 ou 14, **caractérisé en ce que** les corrections (COR) de commande de visée sont enregistrées (E10) dans le système (300) de tir du au moins un faisceau (F) de rayonnement incident de puissance de l'appareil (302) de fabrication additive.

16. Procédé de calibration suivant l'une quelconque des revendications 13 à 15, **caractérisé en ce que** dans la au moins une couche (22) de gravage par faisceau (F) de rayonnement incident de puissance se trouve au moins une mire (50) de positionnement, ayant des dimensions supérieures aux dimensions du au moins un marquage (30) de référence et/ou aux dimensions du au moins un marquage (40) de test,
les étapes suivantes (E11, E12, E13) sont effectuées entre le positionnement (E1) du plateau (10) de calibration amovible dans l'appareil (302) de fabrication additive et la commande (E2) du système (300) de tir du au moins un faisceau (F) de rayonnement incident de puissance de l'appareil (302) de fabrication additive :
commande (E11) du au moins un système (300) de tir de l'appareil (302) de fabrication additive pour émettre au moins un autre faisceau de rayonnement en lumière visible, sans émettre de faisceau (F) de rayonnement incident de puissance depuis le côté (304) d'émission sur la au moins une couche (22) de gravage du plateau (10) de calibration amovible, pour projeter un premier impact (IMP1) du au moins un autre faisceau de rayonnement en lumière visible sur la au moins une mire (50) de positionnement,
mesure (E12), à l'oeil nu sur la au moins une mire (50) de positionnement, de l'écart de centrage du premier impact (IMP1) de l'autre faisceau de rayonnement en lumière visible par rapport à une position théorique prévue en un centre (C ) de la au moins une mire (50) de positionnement,
modification (E13) de la commande du au moins un système (300) de tir de l'appareil (302) de fabrication additive selon une correction (COR2) de décalage de commande pour émettre le au moins un autre faisceau de rayonnement en lumière visible, sans émettre de faisceau (F) de rayonnement incident de puissance depuis le côté (304) d'émission sur la au moins une couche (22) de gravage du plateau (10) de calibration amovible, pour projeter un deuxième impact (IMP2) du au moins un autre faisceau de rayonnement en lumière visible sur le centre (C ) de la au moins une mire (50) de positionnement,
enregistrement (E13) de la correction (COR2) de décalage de commande dans une mémoire du système (300) de tir ou de l'appareil (302) de fabrication additive et/ou dans une mémoire de l'appareil (200) de capture d'image et/ou dans une mémoire du calculateur (207),
ladite commande (E2) du au moins un système (300) de tir du au moins un faisceau (F) de rayonnement incident de puissance de l'appareil (302) de fabrication additive, selon la commande de visée du système (300) de tir, déterminée par rapport au au moins un marquage (30) de référence, pour émettre le au moins un faisceau (F) de rayonnement incident de puissance depuis le côté (304) d'émission sur la au moins une couche (22) de gravage du plateau (10) de calibration amovible, pour y former le au moins un marquage (40) de test par destruction locale de la couche (22) de gravage, étant effectuée en étant corrigée par la correction (COR2) de décalage de commande, ayant été enregistrée,
le au moins un faisceau (F) de rayonnement incident de puissance et le au moins un autre faisceau laser en lumière visible étant coaxiaux.

17. Procédé de calibration suivant l'une quelconque des revendications 13 à 16, **caractérisé en ce que** le kit comporte en outre un support (212) de stockage amovible, qui est distinct de la première mémoire (208) et dans lequel sont enregistrés l'identifiant (ID) unique déterminé du plateau (10) de calibration et les coordonnées absolues (X3, Y3) du au moins un marquage (30) de référence, associées à l'identifiant (ID) unique déterminé du plateau (10) de calibration, l'appareil (200) de capture d'image et/ou le calculateur (207) comportant une interface (213) permettant de récupérer dans le support (212) de stockage amovible l'identifiant (ID) unique déterminé du plateau (10) de calibration et/ou les coordonnées absolues (X3, Y3) du au moins un marquage (30) de référence, associées à l'identifiant (ID) unique déterminé du plateau (10) de calibration, pour les enregistrer dans la première mémoire (208),
le procédé comporte en outre, entre le positionnement (E1) du plateau (10) de calibration amovible dans l'appareil (302) de fabrication additive et la commande (E2) du système (300) de tir du au moins un faisceau (F) de rayonnement incident de puissance de l'appareil (302) de fabrication additive selon la commande de visée du système (300) de tir, l'étape intermédiaire (E1bis) de lecture de l'identifiant (ID) unique du plateau (10) de calibration et/ou des coordonnées absolues (X3, Y3) du au moins un marquage (30) de référence dans le support (212) de stockage amovible.

18. Procédé de calibration suivant l'une quelconque des revendications 13 à 16, **caractérisé en ce que** le plateau (10) de calibration amovible comporte au moins une deuxième mémoire permanente (210), dans laquelle sont enregistrées un identifiant (ID) unique du plateau (10) de calibration et des coordonnées absolues (X3, Y3) du au moins un marquage (30) de référence, qui ont été déterminées au préalable et qui sont associées à l'identifiant (ID) unique du plateau (10) de calibration,
la au moins une deuxième mémoire permanente (210) est sous la forme d'une puce NFC et/ou RFID (211), fixée au plateau (10) de calibration amovible,
l'appareil (200) de capture d'image et/ou le calculateur (207) et/ou le capteur (205) comporte un lecteur NFC et/ou RFID (310), apte à lire dans la puce NFC et/ou RFID (211) l'identifiant (ID) unique du plateau (10) de calibration et/ou les coordonnées absolues (X3, Y3) du au moins un marquage (30) de référence,
le procédé comporte en outre, entre le positionnement (E1) du plateau (10) de calibration amovible dans l'appareil (302) de fabrication additive et la commande (E2) du système (300) de tir du au moins un faisceau (F) de rayonnement incident de puissance de l'appareil (302) de fabrication additive selon la commande de visée du système (300) de tir, l'étape intermédiaire (E1bis) de lecture de l'identifiant (ID) unique du plateau (10) de calibration et/ou des coordonnées absolues (X3, Y3) du au moins un marquage (30) de référence dans la puce NFC et/ou RFID (211) par le lecteur NFC et/ou RFID (310).

19. Procédé de calibration suivant l'une quelconque des revendications 13 à 16, **caractérisé en ce que** le procédé comporte en outre, entre le positionnement (E1) du plateau (10) de calibration amovible dans l'appareil (302) de fabrication additive et la commande (E2) du système (300) de tir du au moins un faisceau (F) de rayonnement incident de puissance de l'appareil (302) de fabrication additive selon la commande de visée du système (300) de tir, l'étape intermédiaire (E1bis) de lecture de l'identifiant (ID) unique du plateau (10) de calibration et/ou des coordonnées absolues (X3, Y3) du au moins un marquage (30) de référence dans un fichier stocké dans une base de données hébergée sur un serveur (214) distant, auquel le calculateur (207) a accès.

## Patentansprüche

1. Entnehmbares Gerät (200) zur Aufnahme mindestens eines Bildes,
wobei das Gerät (200) zur Bildaufnahme umfasst:
ein Gehäuse (201), das einen Rahmen (201) umfasst, der eine Öffnung (202) begrenzt, die dazu bestimmt ist, eine Kalibrierungsplatte (10) aufzunehmen, die mindestens eine Referenzmarkierung (30) und gegebenenfalls mindestens eine Testmarkierung (40) trägt,
Elemente (203) zum Halten der Kalibrierungsplatte (1) in der Öffnung (202),
**dadurch gekennzeichnet, dass** das Gerät (200) zur Bildaufnahme ferner umfasst:
mindestens eine Quelle (204) für sichtbares Hinterleuchtungslicht, die unter der Öffnung (202) gelegen ist,
einen Sensor (205) zum Erfassen mindestens eines Bildes im sichtbaren Hinterleuchtungslicht der Kalibrierungsplatte (10),
eine Führungs- und Halterungsvorrichtung (206), um den Sensor (205) über der Öffnung (202) in Bezug auf den Rahmen (201) zu positionieren,
einen Rechner (207), der dazu ausgestaltet ist, das mindestens eine von dem Sensor (205) erfasste Bild auszuwerten, die mindestens eine Referenzmarkierung (30) und gegebenenfalls die mindestens eine Testmarkierung (40) in dem mindestens einen von dem Sensor (205) erfassten Bild zu erkennen und Zielsteuerungskorrekturen (COR) zu berechnen, die für ein System (300) zum Abfeuern mindestens eines Strahls (F) aus einfallender Leistungsstrahlung eines Geräts (302) zur generativen Fertigung bestimmt sind, das von dem Gerät (200) zur Bildaufnahme getrennt und verschieden ist,
wobei das Gerät (200) zur Bildaufnahme und/oder der Rechner (207) einen ersten Speicher (208) umfasst, in dem, unter Zuordnung zu einer bestimmten einmaligen Kennung (ID) der Kalibrierungsplatte (10), absolute Koordinaten (X3, Y3) der mindestens einen Referenzmarkierung (30) vorgespeichert sind, die zuvor bestimmt worden sind,
wobei der Rechner (207) dazu ausgestaltet ist, die Zielsteuerungskorrekturen (COR) des Systems (300) zum Abfeuern des mindestens einen Strahls (F) aus einfallender Leistungsstrahlung des Geräts (302) zur generativen Fertigung in Abhängigkeit von Koordinaten (X4, Y4) der mindestens einen Testmarkierung (40), die für die mindestens eine Referenzmarkierung (30) berechnet werden, und in Abhängigkeit von den absoluten Koordinaten (X3, Y3) der mindestens einen Referenzmarkierung (30) zu berechnen.

2. Transportables Kalibrierungskit (100), umfassend das Gerät (200) zur Aufnahme mindestens eines Bildes nach Anspruch 1 und mindestens eine entnehmbare Kalibrierungsplatte (1),
wobei die entnehmbare Kalibrierungsplatte (1) geeignet ist, in dem Feld eines Systems (300) zum Abfeuern mindestens eines Strahl (F) aus einfallender Leistungsstrahlung eines Geräts (302) zur generativen Fertigung positioniert zu werden,
wobei die entnehmbare Kalibrierungsplatte (10) eine Platte (20) umfasst,
wobei die Platte (20) eine Oberseite (21) umfasst, die dazu bestimmt ist, dem Strahl (F) aus einfallender Leistungsstrahlung zugewandt zu sein, wobei die Platte (2) die mindestens eine Referenzmarkierung (30) trägt und dazu bestimmt ist, mindestens eine Testmarkierung (40) aufzunehmen, und eine Unterseite (23), die bezogen auf die Oberseite (21) entlang der Richtung der Dicke der Platte (20) entfernt ist,
wobei die entnehmbare Kalibrierungsplatte (10) mindestens eine Schicht (22) zum Gravieren durch einen Strahl (F) aus einfallender Leistungsstrahlung umfasst, wobei die mindestens eine Schicht (22) zum Gravieren durch einen Strahl (F) aus einfallender Leistungsstrahlung mit der Oberseite (21) der Platte (20) fest verbunden ist und für sichtbares Licht undurchlässig ist,
wobei die mindestens eine Schicht (22) zum Gravieren durch einen Strahl (F) aus einfallender Leistungsstrahlung geeignet ist, durch den Strahl (F) aus einfallender Leistungsstrahlung lokal zerstört zu werden, um gegebenenfalls die mindestens eine Testmarkierung (40) zu bilden,
wobei die Platte (20) für sichtbares Licht durchlässig ist,
wobei die Unterseite (23) der Platte (20) mattiert ist.

3. Entnehmbares Kalibrierungskit (100) nach Anspruch 2, **dadurch gekennzeichnet, dass** die Unterseite (23) der Platte (20) für sichtbares Hinterleuchtungslicht durchlässig ist.

4. Entnehmbares Kalibrierungskit (100) nach Anspruch 2 oder 3, **dadurch gekennzeichnet, dass** die mindestens eine Referenzmarkierung (30) durch lokale Zerstörung der mindestens einen Schicht (22) zum Gravieren durch einen Strahl (F) aus einfallender Leistungsstrahlung ausgeführt wird.

5. Entnehmbares (100) Kalibrierungskit nach einem der Ansprüche 2 bis 4, **dadurch gekennzeichnet, dass** sich in der mindestens einen Schicht (22) zum Gravieren durch einen Strahl (F) aus einfallender Leistungsstrahlung mindestens eine Zielvorrichtung (50) zur Positionierung mit Abmessungen befindet, die größer als die Abmessungen der mindestens einen Referenzmarkierung (30) und/oder als die Abmessungen der mindestens einen Testmarkierung (40) sind.

6. Entnehmbares Kalibrierungskit (100) nach einem der Ansprüche 2 bis 5, **dadurch gekennzeichnet, dass** die mindestens eine Schicht (22) zum Gravieren durch einen Strahl (F) aus einfallender Leistungsstrahlung mindestens eine Schicht (22) zum Gravieren durch einen Strahl (F) aus einfallender Leistungslaserstrahlung ist.

7. Entnehmbares Kalibrierungskit (100) nach einem der Ansprüche 2 bis 6, **dadurch gekennzeichnet, dass** die Platte (20) Glas beinhaltet oder aus Glas ist.

8. Entnehmbares Kalibrierungskit (100) nach einem der Ansprüche 2 bis 7, **dadurch gekennzeichnet, dass** die Kalibrierungsplatte (1) die mindestens eine Testmarkierung (40) umfasst, die durch lokale Zerstörung der mindestens einen Schicht (22) zum Gravieren durch einen Strahl (F) aus einfallender Leistungsstrahlung ausgeführt wird.

9. Entnehmbares Kalibrierungskit (100) nach einem der Ansprüche 2 bis 8, **dadurch gekennzeichnet, dass** sich in der mindestens einen Schicht (22) zum Gravieren durch einen Strahl (F) aus einfallender Leistungsstrahlung die mindestens eine Referenzmarkierung (30), die durch lokale Zerstörung der mindestens einen Schicht (22) zum Gravieren durch den Strahl (F) aus einfallender Leistungsstrahlung ausgeführt wird, und die mindestens eine Testmarkierung (40), die durch lokale Zerstörung der mindestens einen Schicht (22) zum Gravieren durch den Strahl (F) aus einfallender Leistungsstrahlung ausgeführt wird, befinden.

10. Entnehmbares Kalibrierungskit (100) nach Anspruch 8 oder 9, **dadurch gekennzeichnet, dass** die mindestens eine Testmarkierung (40), die in der Schicht (22) zum Gravieren durch einen Strahl (F) aus einfallender Leistungsstrahlung vorhanden ist, eine Kennung (ID40) der Testmarkierung (40) umfasst.

11. Entnehmbares Kalibrierungskit (100) nach einem der Ansprüche 2 bis 10, **dadurch gekennzeichnet, dass** das Kit ferner ein entnehmbares Speichermedium (212) umfasst, das von dem ersten Speicher (208) verschieden ist und in dem die bestimmte einmalige Kennung (ID) der Kalibrierungsplatte (10) und die absoluten Koordinaten (X3, Y3) der mindestens einen Referenzmarkierung (30), die der bestimmten einmaligen Kennung (ID) der Kalibrierungsplatte (10) zugeordnet sind, gespeichert sind, wobei das Gerät (200) zur Bildaufnahme und/oder der Rechner (207) eine Schnittstelle (213) umfasst, die es ermöglicht, in dem entnehmbaren Speichermedium (212) die bestimmte einmalige Kennung (ID) der Kalibrierungsplatte (10) und/oder die absoluten Koordinaten (X3, Y3) der mindestens einen Referenzmarkierung (30), die der bestimmten einmaligen Kennung (ID) der Kalibrierungsplatte (10) zugeordnet sind, abzurufen, um sie in dem ersten Speicher (208) zu speichern.

12. Entnehmbares Kalibrierungskit (100) nach einem der Ansprüche 2 bis 10, **dadurch gekennzeichnet, dass** die entnehmbare Kalibrierungsplatte (10) mindestens einen zweiten Permanentspeicher (210) umfasst, in dem die einmalige Kennung (ID) der Kalibrierungsplatte (10) und die absoluten Koordinaten (X3, Y3) der mindestens einen Referenzmarkierung (30), die der einmaligen Kennung (ID) der Kalibrierungsplatte (10) zugeordnet sind, gespeichert sind,
der mindestens eine zweite Permanentspeicher (210) der entnehmbaren Kalibrierungsplatte (10) in Form eines NFC-und/oder RFID-Chips (211) vorliegt, der an der entnehmbaren Kalibrierungsplatte (10) befestigt ist,
das Gerät (200) zur Bildaufnahme und/oder der Rechner (207) und/oder der Sensor (205) eine NFC- und/oder RFID-Lesevorrichtung (310) umfasst, die geeignet ist, aus dem NFC- und/oder RFID-Chip (211) die einmalige Kennung (ID) der Kalibrierungsplatte (10) und/oder die absoluten Koordinaten (X3, Y3) der mindestens einen Referenzmarkierung (30) auszulesen, um sie in dem ersten Speicher (208) zu speichern.

13. Verfahren zur Kalibrierung eines Systems (300) zum Abfeuern mindestens eines Strahls (F) aus einfallender Leistungsstrahlung eines Geräts (302) zur generativen Fertigung mithilfe des entnehmbaren Kalibrierungskits (100) nach einem der Ansprüche 2 bis 12,
**dadurch gekennzeichnet, dass** das Verfahren zur Kalibrierung die folgenden Schritte umfasst:
Positionieren (E1) der entnehmbaren Kalibrierungsplatte (10) in dem Gerät (302) zur generativen Fertigung, wobei die mindestens eine Schicht (22) zum Gravieren durch einen Strahl (F) aus einfallender Leistungsstrahlung der entnehmbaren Kalibrierungsplatte (10) zu einer Emissionsseite (304) des mindestens einen Strahls (F) aus einfallender Leistungsstrahlung des Systems (300) zum Abfeuern des Geräts (302) zur generativen Fertigung ausgerichtet ist,
Steuern (E2) des Systems (300) zum Abfeuern des mindestens einen Strahls (F) aus einfallender Leistungsstrahlung des Geräts (302) zur generativen Fertigung gemäß einer Zielsteuerung des Systems (300) zum Abfeuern, die in Bezug auf die mindestens eine Referenzmarkierung (30) bestimmt wird, um den mindestens einen Strahl (F) aus einfallender Leistungsstrahlung von der Emissionsseite (304) aus auf die mindestens eine Schicht (22) zum Gravieren der entnehmbaren Kalibrierungsplatte (10) zu emittieren, um dort die mindestens eine Testmarkierung (40) durch lokale Zerstörung der Schicht (22) zum Gravieren zu bilden,
Entnehmen (E3) der entnehmbaren Kalibrierungsplatte (10) aus dem Gerät (302) zur generativen Fertigung,
Bewegen (E4) der entnehmbaren Kalibrierungsplatte (10) bis zu dem Gerät (200) zur Aufnahme mindestens eines Bildes, das transportabel ist und von dem System (300) zum Abfeuern des mindestens einen Strahls (F) aus einfallender Leistungsstrahlung des Geräts (302) zur generativen Fertigung getrennt ist,
Positionieren (E5) der entnehmbaren Kalibrierungsplatte (10) in der Öffnung (202) des Geräts (200) zur Bildaufnahme,
Steuern (E6) der mindestens einen Quelle (204) für sichtbares Hinterleuchtungslicht des Geräts (200) zur Bildaufnahme, damit das sichtbare Hinterleuchtungslicht in der Öffnung (202), von der Unterseite (23) aus, die Platte (20), die mindestens eine Referenzmarkierung (30) und die mindestens eine Testmarkierung (40) durchquert, Erfassen (E7), durch den Sensor (205), mindestens eines Bildes eines Bereichs, in dem sich die mindestens eine Referenzmarkierung (30) und die mindestens eine Testmarkierung (40) in sichtbarem Hinterleuchtungslicht befinden,
Auswerten (E8), durch einen Rechner (207) des Geräts (200) zur Bildaufnahme, des mindestens einen von dem Sensor (205) erfassten Bildes und Erkennen der mindestens einen Referenzmarkierung (30) und der mindestens einen Testmarkierung (40) in dem mindestens einen erfassten Bild, um Koordinaten (X4, Y4) der mindestens einen Testmarkierung (40) in Bezug auf die mindestens eine Referenzmarkierung (30) zu berechnen,
Berechnen und Speichern (E9), in dem ersten Speicher (208) des Geräts (200) zur Bildaufnahme, durch den Rechner (207) des Geräts (200) zur Bildaufnahme, der Zielsteuerungskorrekturen (COR) des Systems (300) zum Abfeuern des mindestens einen Strahls (F) aus einfallender Leistungsstrahlung des Geräts (302) zur generativen Fertigung in Abhängigkeit mindestens von den Koordinaten (X4, Y4) der mindestens einen Testmarkierung (40), die für die mindestens eine Referenzmarkierung (30) berechnet wurden.

14. Verfahren zur Kalibrierung nach Anspruch 13, **dadurch gekennzeichnet, dass** die Zielsteuerungskoordinaten (COR) in dem ersten Speicher (208) unter Zuordnung zu der Kennung (ID) der entnehmbaren Kalibrierungsplatte und zu den absoluten Koordinaten (X3, Y3) der mindestens einen Referenzmarkierung (30) gespeichert werden (E9).

15. Verfahren zur Kalibrierung nach Anspruch 13 oder 14, **dadurch gekennzeichnet, dass** die Zielsteuerungskoordinaten (COR) in dem System (300) zum Abfeuern des mindestens einen Strahls (F) aus einfallender Leistungsstrahlung des Geräts (302) zur generativen Fertigung gespeichert werden (E10).

16. Verfahren zur Kalibrierung nach einem der Ansprüche 13 bis 15, **dadurch gekennzeichnet, dass** sich in der mindestens einen Schicht (22) zum Gravieren durch einen Strahl (F) aus einfallender Leistungsstrahlung mindestens eine Zielvorrichtung (50) zur Positionierung mit Abmessungen befindet, die größer als die Abmessungen der mindestens einen Referenzmarkierung (30) und/oder als die Abmessungen der mindestens einen Testmarkierung (40) sind,
die folgenden Schritte (E11, E12, E13) zwischen dem Positionieren (E1) der entnehmbaren Kalibrierungsplatte (10) in dem Gerät (302) zur generativen Fertigung und dem Steuern (E2) des Systems (300) zum Abfeuern des mindestens einen Strahls (F) aus einfallender Leistungsstrahlung des Geräts (302) zur generativen Fertigung durchgeführt werden:
Steuern (E11) des mindestens einen Systems (300) zum Abfeuern des Geräts (302) zur generativen Fertigung, um mindestens einen weiteren Strahl aus Strahlung aus sichtbarem Licht zu emittieren, ohne einen Strahl (F) aus einfallender Leistungsstrahlung von der Emissionsseite (304) aus auf die mindestens eine Schicht (22) zum Gravieren der entnehmbaren Kalibrierungsplatte (10) zu emittieren, um einen ersten Auftreffpunkt (IMP1) des mindestens einen weiteren Strahls aus Strahlung aus sichtbaren Licht auf die mindestens eine Zielvorrichtung (50) zur Positionierung zu projizieren,
Messen (E12), mit bloßem Auge auf der mindestens einen Zielvorrichtung (50) zur Positionierung, der Zentrierungsabweichung des ersten Auftreffpunkts (IMP1) des weiteren Strahls aus Strahlung aus sichtbarem Licht in Bezug auf eine vorgesehene theoretische Position in einem Zentrum der mindestens einen Zielvorrichtung (50) zur Positionierung,
Ändern (E13) der Steuerung des mindestens einen Systems (300) zum Abfeuern des Geräts (302) zur generativen Fertigung gemäß einer Steuerungsversatzkorrektur (COR2), um den mindestens einen weiteren Strahl aus Strahlung aus sichtbarem Licht zu emittieren, ohne einen Strahl (F) aus einfallender Leistungsstrahlung von der Emissionsseite (304) aus auf die mindestens eine Schicht (22) zum Gravieren der entnehmbaren Kalibrierungsplatte (10) zu emittieren, um einen zweiten Auftreffpunkt (IMP2) des mindestens einen weiteren Strahls aus Strahlung aus sichtbaren Licht auf das Zentrum (C) der mindestens einen Zielvorrichtung (50) zur Positionierung zu projizieren, Speichern (E13) der Steuerungsversatzkorrektur (COR2) in einem Speicher des Systems (300) zum Abfeuern oder des Geräts (302) zur generativen Fertigung und/oder in einem Speicher des Geräts (200) zur Bildaufnahme und/oder in einem Speicher des Rechners (207),
wobei das Steuern (E2) des mindestens einen Systems (300) zum Abfeuern des mindestens einen Strahls (F) aus einfallender Leistungsstrahlung des Geräts (302) zur generativen Fertigung, gemäß der Zielsteuerung des Systems (300) zum Abfeuern, die in Bezug auf die mindestens eine Referenzmarkierung (30) bestimmt wird, um den mindestens einen Strahl (F) aus einfallender Leistungsstrahlung von der Emissionsseite (304) aus auf die mindestens eine Schicht (22) zum Gravieren der entnehmbaren Kalibrierungsplatte (10) zu emittieren, um dort die mindestens eine Testmarkierung (40) durch lokale Zerstörung der Schicht (22) zum Gravieren zu bilden, die unter Korrektur durch die Steuerungsversatzkorrektur (COR2) durchgeführt wird, gespeichert worden ist,
wobei der mindestens eine Strahl (F) aus einfallender Leistungsstrahlung und der mindestens eine weitere Laserstrahl aus sichtbaren Licht koaxial sind.

17. Verfahren zur Kalibrierung nach einem der Ansprüche 13 bis 16, **dadurch gekennzeichnet, dass** das Kit ferner ein entnehmbares Speichermedium (212) umfasst, das von dem ersten Speicher (208) verschieden ist und in dem die bestimmte einmalige Kennung (ID) der Kalibrierungsplatte (10) und die absoluten Koordinaten (X3, Y3) der mindestens einen Referenzmarkierung (30), die der bestimmten einmaligen Kennung (ID) der Kalibrierungsplatte (10) zugeordnet sind, gespeichert sind, wobei das Gerät (200) zur Bildaufnahme und/oder der Rechner (207) eine Schnittstelle (213) umfasst, die es ermöglicht, in dem entnehmbaren Speichermedium (212) die bestimmte einmalige Kennung (ID) der Kalibrierungsplatte (10) und/oder die absoluten Koordinaten (X3, Y3) der mindestens einen Referenzmarkierung (30), die der bestimmten einmaligen Kennung (ID) der Kalibrierungsplatte (10) zugeordnet sind, abzurufen, um sie in dem ersten Speicher (208) zu speichern,
wobei das Verfahren ferner, zwischen dem Positionieren (E1) der entnehmbaren Kalibrierungsplatte (10) in dem Gerät (302) zur generativen Fertigung und dem Steuern (E2) des Systems (300) zum Abfeuern des mindestens einen Strahls (F) aus einfallender Leistungsstrahlung des Geräts (302) zur generativen Fertigung gemäß der Zielsteuerung des Systems (300) zum Abfeuern, den Zwischenschritt (E1bis) des Auslesens der einmaligen Kennung (ID) der Kalibrierungsplatte (10) und/oder der absoluten Koordinaten (X3, Y3) der mindestens einen Referenzmarkierung (30) aus dem entnehmbaren Speichermedium (212) umfasst.

18. Verfahren zur Kalibrierung nach einem der Ansprüche 13 bis 16, **dadurch gekennzeichnet, dass** die entnehmbare Kalibrierungsplatte (10) mindestens einen zweiten Permanentspeicher (210) umfasst, in dem eine einmalige Kennung (ID) der Kalibrierungsplatte (10) und absolute Koordinaten (X3, Y3) der mindestens einen Referenzmarkierung (30), die zuvor bestimmt worden sind und die der einmaligen Kennung (ID) der Kalibrierungsplatte (10) zugeordnet sind, gespeichert werden,
der mindestens eine zweite Permanentspeicher (210) in Form eines NFC- und/oder RFID-Chips (211) vorliegt, der an der entnehmbaren Kalibrierungsplatte (10) befestigt ist,
das Gerät (200) zur Bildaufnahme und/oder der Rechner (207) und/oder der Sensor (205) eine NFC- und/oder RFID-Lesevorrichtung (310) umfasst, die geeignet ist, aus dem NFC- und/oder RFID-Chip (211) die einmalige Kennung (ID) der Kalibrierungsplatte (10) und/oder die absoluten Koordinaten (X3, Y3) der mindestens einen Referenzmarkierung (30) auszulesen,
das Verfahren ferner, zwischen dem Positionieren (E1) der entnehmbaren Kalibrierungsplatte (10) in dem Gerät (302) zur generativen Fertigung und dem Steuern (E2) des Systems (300) zum Abfeuern des mindestens einen Strahls (F) aus einfallender Leistungsstrahlung des Geräts (302) zur generativen Fertigung gemäß der Zielsteuerung des Systems (300) zum Abfeuern, den Zwischenschritt (E1bis) des Auslesens der einmaligen Kennung (ID) der Kalibrierungsplatte (10) und/oder der absoluten Koordinaten (X3, Y3) der mindestens einen Referenzmarkierung (30) aus dem NFC- und/oder RFID-Chip (211) durch die NFC- und/oder RFID-Lesevorrichtung (310) umfasst.

19. Verfahren zur Kalibrierung nach einem der Ansprüche 13 bis 16, **dadurch gekennzeichnet, dass** das Verfahren ferner, zwischen dem Positionieren (E1) der entnehmbaren Kalibrierungsplatte (10) in dem Gerät (302) zur generativen Fertigung und dem Steuern (E2) des Systems (300) zum Abfeuern des mindestens einen Strahls (F) aus einfallender Leistungsstrahlung des Geräts (302) zur generativen Fertigung gemäß der Zielsteuerung des Systems (300) zum Abfeuern, den Zwischenschritt (E1bis) des Auslesens der einmaligen Kennung (ID) der Kalibrierungsplatte (10) und/oder der absoluten Koordinaten (X3, Y3) der mindestens einen Referenzmarkierung (30) aus einer Datei umfasst, die in einer Datenbank gespeichert ist, die auf einem entfernten Server (214) gehostet wird, auf den der Rechner (207) Zugriff hat.

## Claims

1. Removable image-capture apparatus (200) for capturing at least one image,
the image-capture apparatus (200) comprising:
a casing (201) comprising a surround (201) delimiting an opening (202) intended to receive a calibration plate (10) bearing at least one reference marking (30) and possibly at least one test marking (40),
retaining members (203) for holding the calibration plate (1) in the opening (202),
**characterized in that** the image-capture apparatus (200) further comprises:
at least one source (204) of backlighting visible light situated beneath the opening (202),
a sensor (205) for acquiring at least one image, in the backlighting visible light, of the calibration plate (10),
a guiding and supporting device (206) for positioning the sensor (205) above the opening (202) relative to the surround (201),
a calculation device (207) configured to analyse the at least one image acquired by the sensor (205), recognise the at least one reference marking (30) and the possible at least one test marking (40) in the at least one image acquired by the sensor (205), and calculate aiming-command corrections (COR) intended for a firing system (300) firing at least one powerful incident-radiation beam (F), which system belongs to an additive manufacturing apparatus (302), distinct and separate from the image-capture apparatus (200), the image-capture apparatus (200) and/or the calculation device (207) comprising a first memory (208) in which there have been pre-recorded, in association with a determined unique identification (ID) of the calibration plate (10), absolute coordinates (X3, Y3) of the at least one reference marking (30), which coordinates have been determined beforehand,
the calculation device (207) being configured to calculate the aiming-command corrections (COR) for the aiming of the firing system (300) firing the at least one powerful incident-radiation beam (F), which system belongs to the additive manufacturing apparatus (302), on the basis of coordinates (X4, Y4) of the at least one test marking (40), that were calculated for the at least one reference marking (30), and on the basis of the absolute coordinates (X3, Y3) of the at least one reference marking (30).

2. Portable calibration kit (100), comprising the image-capture apparatus (200) for capturing at least one image according to Claim 1 and at least a removable calibration plate (1),
the removable calibration plate (1) being able to be positioned in the field of a firing system (300) firing at least one powerful incident-radiation beam (F), which system belongs to an additive manufacturing apparatus (302),
the removable calibration plate (10) comprising a sheet (20),
the sheet (20) comprising an upper face (21) intended to face towards the powerful incident-radiation beam (F), the sheet (2) bearing the at least one reference marking (30) and being intended to receive at least one test marking (40), and a lower face (23), which is distanced from the upper face (21) in the thickness direction of the sheet (20),
the removable calibration plate (10) comprises at least one etching layer (22) to be etched by a powerful incident-radiation beam (F),
the at least one etching layer (22) to be etched by a powerful incident-radiation beam (F) being secured to the upper face (21) of the sheet (20) and being opaque to visible light,
the at least one etching layer (22) to be etched by a powerful incident-radiation beam (F) being able to be destroyed locally by the powerful incident-radiation beam (F) in order to optionally form the at least one test marking (40),
the sheet (20) being transparent to visible light,
the lower face (23) of the sheet (20) being frosted.

3. Removable calibration kit (100) according to Claim 2, **characterized in that** the lower face (23) of the sheet (20) is transparent to backlighting visible light.

4. Removable calibration kit (100) according to Claim 2 or 3, **characterized in that** the at least one reference marking (30) is created by locally destroying the at least one etching layer (22) using the powerful incident-radiation beam (F).

5. Removable calibration kit (100) according to any one of Claims 2 to 4, **characterized in that**, in the at least one etching layer (22) to be etched by a powerful incident-radiation beam (F) there is at least one positioning sighting mark (50) of dimensions greater than the dimensions of the at least one reference marking (30) and/or than the dimensions of the at least one test marking (40).

6. Removable calibration kit (100) according to any one of Claims 2 to 5, **characterized in that** the at least one etching layer (22) to be etched by a powerful incident-radiation beam (F) is at least one etching layer (22) to be etched by a powerful beam (F) of incident laser radiation.

7. Removable calibration kit (100) according to any one of Claims 2 to 6, **characterized in that** the sheet (20) contains glass or is made of glass.

8. Removable calibration kit (100) according to any one of Claims 2 to 7, **characterized in that** the calibration plate (1) comprises the at least one test marking (40) created by locally destroying the at least one etching layer (22) to be etched by the powerful incident-radiation beam (F).

9. Removable calibration kit (100) according to any one of Claims 2 to 8, **characterized in that**, in the at least one etching layer (22) to be etched by a powerful incident-radiation beam (F) there are the at least one reference marking (30) created by locally destroying the at least one etching layer (22) to be etched by a powerful incident-radiation beam (F) and the at least one test marking (40) created by locally destroying the at least one etching layer (22) to be etched by a powerful incident-radiation beam (F).

10. Removable calibration kit (100) according to Claim 8 or 9, **characterized in that** the at least one test marking (40) present in the etching layer (22) to be etched by a powerful incident-radiation beam (F) comprises an identification (ID40) of the test marking (40).

11. Removable calibration kit (100) according to any one of Claims 2 to 10, **characterized in that** the kit further comprises a removable storage medium (212), distinct from the first memory (208) and on which are stored the determined unique identification (ID) of the calibration plate (10) and the absolute coordinates (X3, Y3) of the at least one reference marking (30), which coordinates are associated with the determined unique identification (ID) of the calibration plate (10), the image-capture apparatus (200) and/or the calculation device (207) comprising an interface (213) allowing the determined unique identification (ID) of the calibration plate (10) and/or the absolute coordinates (X3, Y3) of the at least one reference marking (30), which coordinates are associated with the determined unique identification (ID) of the calibration plate (10), to be recovered from the removable storage medium (212) in order to record them in the first memory (208).

12. Removable calibration kit (100) according to any one of Claims 2 to 10, **characterized in that** the removable calibration plate (10) comprises at least one second non-volatile memory (210) in which there are recorded the unique identification (ID) of the calibration plate (10) and the absolute coordinates (X3, Y3) of the at least one reference marking (30), which coordinates are associated with the unique identification (ID) of the calibration plate (10),
the at least one second non-volatile memory (210) of the removable calibration plate (10) is in the form of an NFC and/or RFID chip (211) fixed to the removable calibration plate (10),
the image-capture apparatus (200) and/or the calculation device (207) and/or the sensor (205) comprises an NFC and/or RFID reader (310) able to read from the NFC and/or RFID chip (211) the unique identification (ID) of the calibration plate (10) and/or the absolute coordinates (X3, Y3) of the at least one reference marking (30), in order to record them in the first memory (208).

13. Method for calibrating a firing system (300) firing at least one powerful incident-radiation beam (F), which system belongs to an additive manufacturing apparatus (302), using the removable calibration kit (100) according to any one of Claims 2 to 12,
**characterized in that** the calibration method comprises the following steps:
positioning (E1) the removable calibration plate (10) in the additive manufacturing apparatus (302), the at least one etching layer (22) to be etched by a powerful incident-radiation beam (F) and that belongs to the removable calibration plate (10) being oriented towards that side (304) of the additive manufacturing apparatus (302) from which the firing system (300) emits the at least one powerful incident-radiation beam (F),
commanding (E2) the firing system (300) firing the at least one powerful incident-radiation beam (F), which system belongs to the additive manufacturing apparatus (302), according to an aiming command for the aiming of the firing system (300), which is determined with respect to the at least one reference marking (30), to emit the at least one powerful incident-radiation beam (F) from the emission side (304) onto the at least one etching layer (22) of the removable calibration plate (10) in order thereon to form the at least one test marking (40) by local destruction of the etching layer (22),
extracting (E3) the removable calibration plate (10) from the additive manufacturing apparatus (302),
moving (E4) the removable calibration plate (10) to the image-capture apparatus (200) for capturing at least one image, which apparatus is portable and separated from the firing system (300) firing the at least one powerful incident-radiation beam (F), which system belongs to the additive manufacturing apparatus (302),
positioning (E5) the removable calibration plate (10) in the opening (202) of the image-capture apparatus (200),
commanding (E6) the at least one source (204) of backlighting visible light of the image-capture apparatus (200) so that the backlighting visible light passes through the opening (202), from the lower face (23), the sheet (20), the at least one reference marking (30) and the at least one test marking (40),
acquiring (E7), using the sensor (205), at least one image of a zone in which there are the at least one reference marking (30) and the at least one test marking (40) produced with backlighting visible light,
analysing (E8), using a calculation device (207) belonging to the image-capture apparatus (200), the at least one image acquired by the sensor (205) and recognising the at least one reference marking (30) and the at least one test marking (40) in the at least one image acquired, so as to calculate coordinates (X4, Y4) of the at least one test marking (40) with respect to the at least one reference marking (30),
calculating and recording (E9), in the first memory (208) of the image-capture apparatus (200), using the calculation device (207) of the image-capture apparatus (200), aiming-command corrections (COR) for the aiming of the firing system (300) firing the at least one powerful incident-radiation beam (F), which system belongs to the additive manufacturing apparatus (302), on the basis of at least the coordinates (X4, Y4) of the at least one test marking (40), that were calculated for the at least one reference marking (30).

14. Calibration method according to Claim 13, **characterized in that** the aiming-command corrections (COR) are recorded (E9) in the first memory (208) in association with the identification (ID) of the removable calibration plate and with the absolute coordinates (X3, Y3) of the at least one reference marking (30).

15. Calibration method according to Claim 13 or 14, **characterized in that** the aiming-command corrections (COR) are recorded (E10) in the firing system (300) firing the at least one powerful incident-radiation beam (F), which system belongs to the additive manufacturing apparatus (302).

16. Calibration method according to any one of Claims 13 to 15, **characterized in that**, in the at least one etching layer (22) to be etched by a powerful incident-radiation beam (F) there is at least one positioning sighting mark (50) having dimensions greater than the dimensions of the at least one reference marking (30) and/or than the dimensions of the at least one test marking (40),
the following steps (E11, E12, E13) are performed between the positioning (E1) of the removable calibration plate (10) in the additive manufacturing apparatus (302) and the commanding (E2) of the firing system (300) firing the at least one powerful incident-radiation beam (F), which system belongs to the additive manufacturing apparatus (302):
commanding (E11) the at least one firing system (300) belonging to the additive manufacturing apparatus (302) to emit at least one other beam of visible-light radiation, without emitting a powerful incident-radiation beam (F) from the emission side (304) onto the at least one etching layer (22) of the removable calibration plate (10) so as to plan for a first impact (IMPL) of the at least one other beam of visible-light radiation on the at least one positioning sighting mark (50),
measuring (E12), with the naked eye, on the at least one positioning sighting mark (50), the offset in the centring of the first impact (IMPL) of the other beam of visible-light radiation with respect to a theoretical position that is supposed to be at the centre (C) of the at least one positioning sighting mark (50),
modifying (E13) the command of the at least one firing system (300), belonging to the additive manufacturing apparatus (302), with a command-offset correction (COR2) so that it emits at least one other beam of visible-light radiation, without emitting a powerful incident-radiation beam (F) from the emission side (304) onto the at least one etching layer (22) of the removable calibration plate (10) so as to plan for a second impact (IMP2) of the at least one other beam of visible-light radiation on the centre (C) of the at least one positioning sighting mark (50),
recording (E13) the command-offset correction (COR2) in a memory of the firing system (300) or of the additive manufacturing apparatus (302) and/or in a memory of the image-capture apparatus (200) and/or in a memory of the calculation device (207),
said commanding (E2) of the at least one firing system (300) firing the at least one powerful incident-radiation beam (F), which system belongs to the additive manufacturing apparatus (302), according to the aiming command for the aiming of the firing system (300), which is determined with respect to the at least one reference marking (30), to emit the at least one powerful incident-radiation beam (F) from the emission side (304) onto the at least one etching layer (22) of the removable calibration plate (10) in order thereon to form the at least one test marking (40) by local destruction of the etching layer (22), being performed with the recorded command-offset correction (COR2) applied,
the at least one powerful incident-radiation beam (F) and the at least one other visible-light laser beam being coaxial.

17. Calibration method according to anyone of Claims 13 to 16, **characterized in that** the kit further comprises a removable storage medium (212), which is distinct from the first memory (208) and on which are stored the determined unique identification (ID) of the calibration plate (10) and the absolute coordinates (X3, Y3) of the at least one reference marking (30), which coordinates are associated with the determined unique identification (ID) of the calibration plate (10), the image-capture apparatus (200) and/or the calculation device (207) comprising an interface (213) allowing the determined unique identification (ID) of the calibration plate (10) and/or the absolute coordinates (X3, Y3) of the at least one reference marking (30), which coordinates are associated with the determined unique identification (ID) of the calibration plate (10), to be recovered from the removable storage medium (212) in order to record them in the first memory (208),
and the method further comprises, between the positioning (E1) of the removable calibration plate (10) in the additive manufacturing apparatus (302) and the commanding (E2) of the firing system (300) firing the at least one powerful incident-radiation beam (F), which system belongs to the additive manufacturing apparatus (302), according to the aiming command for the aiming of the firing system (300), the intermediate step (E1bis) of reading the unique identification (ID) of the calibration plate (10) and/or the absolute coordinates (X3, Y3) of the at least one reference marking (30) from the removable storage medium (212).

18. Calibration method according to anyone of Claims 13 to 16, **characterized in that** the removable calibration plate (10) comprises at least one second non-volatile memory (210) in which there are recorded a unique identification (ID) of the calibration plate (10) and absolute coordinates (X3, Y3) of the at least one reference marking (30), which coordinates have been determined beforehand and are associated with the unique identification (ID) of the calibration plate (10),
the at least one second non-volatile memory (210) is in the form of an NFC and/or RFID chip (211) fixed to the removable calibration plate (10),
the image-capture apparatus (200) and/or the calculation device (207) and/or the sensor (205) comprises an NFC and/or RFID reader (310) able to read from the NFC and/or RFID chip (211) the unique identification (ID) of the calibration plate (10) and/or the absolute coordinates (X3, Y3) of the at least one reference marking (30),
the method further comprises, between the positioning (E1) of the removable calibration plate (10) in the additive manufacturing apparatus (302) and the commanding (E2) of the firing system (300) firing the at least one powerful incident-radiation beam (F), which system belongs to the additive manufacturing apparatus (302), according to the aiming command for the aiming of the firing system (300), the intermediate step (E1bis) of reading the unique identification (ID) of the calibration plate (10) and/or the absolute coordinates (X3, Y3) of the at least one reference marking (30) in the NFC and/or RFID chip (211) using the NFC and/or RFID reader (310).

19. Calibration method according to anyone of Claims 13 to 16, **characterized in that** the method further comprises, between the positioning (E1) of the removable calibration plate (10) in the additive manufacturing apparatus (302) and the commanding (E2) of the firing system (300) firing the at least one powerful incident-radiation beam (F), which system belongs to the additive manufacturing apparatus (302), according to the aiming command for the aiming of the firing system (300), the intermediate step (E1bis) of reading the unique identification (ID) of the calibration plate (10) and/or the absolute coordinates (X3, Y3) of the at least one reference marking (30) from a file stored in a database hosted on a remote server (214) to which the calculation device (207) has access.
